(19) Europäisches Patentamt
European Patent Office
Office européen des brevets

(11) EP 4 811 050 A1

(12) **EUROPEAN PATENT APPLICATION**
published in accordance with Art. 153(4) EPC

(43) Date of publication:
**23.09.2026 Bulletin 2026/39**

(21) Application number: **24908197.7**

(22) Date of filing: **20.12.2024**

(51) International Patent Classification (IPC):
***G04B 37/14*** (2006.01) ***G04G 21/02*** (2010.01)
***G04G 9/00*** (2006.01) ***G04G 99/00*** (2010.01)
***A44C 5/14*** (2006.01) ***G06F 1/16*** (2006.01)
***G04G 17/04*** (2006.01) ***G04G 21/00*** (2010.01)

(52) Cooperative Patent Classification (CPC):
**A44C 5/14; G04B 37/14; G04G 9/00; G04G 17/04; G04G 21/00; G04G 21/02; G04G 99/00; G06F 1/16**

(86) International application number:
**PCT/KR2024/020891**

(87) International publication number:
**WO 2025/135915 (26.06.2025 Gazette 2025/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.12.2023 KR 20230188672**
**07.02.2024 KR 20240019127**

(71) Applicant: **Samsung Electronics Co., Ltd.**
**Suwon-si, Gyeonggi-do 16677 (KR)**

(72) Inventors:
- **KIM, Heejung**
**Suwon-si, Gyeonggi-do 16677 (KR)**
- **HEO, Seunghyuck**
**Suwon-si, Gyeonggi-do 16677 (KR)**

(74) Representative: **Nederlandsch Octrooibureau**
**P.O. Box 29720**
**2502 LS The Hague (NL)**

# (54) WEARABLE ELECTRONIC DEVICE AND METHOD FOR OPERATING SAME

(57) A wearable electronic device according to one embodiment of the present disclosure comprises: a housing comprising a first housing structure, a second housing structure connected to the first housing structure, and a third housing structure; a first hinge driving module for connecting a first side of the first housing structure and the second housing structure such that the first housing structure and the second housing structure are folded and unfolded; a second hinge driving module for connecting a second side of the first housing structure and the third housing structure such that the first housing structure and the third housing structure are folded and unfolded; a hinge driving unit for driving the first hinge driving module and the second hinge driving module; a display disposed on the housing; a sensor module for sensing an angle between the housing structures and sensing a bending curvature of the display; a memory comprising one or more storage media for storing instructions; and at least one processor comprising a processing circuit. When the instructions are executed by the at least one processor, the electronic device may detect a state in which the wearable electronic device is worn on the wrist of a user by means of the sensor module. On the basis of having detected the state in which the wearable electronic device is worn on the wrist of the user, the activity state of the user can be identified by means of the sensor module. On the basis of a change in the activity state of the user, at least one of the angle between the housing structures and the bending curvature of the display may be adjusted. Various other embodiments are also possible.

FIG. 8

200
211
HINGE ANGLE INCREASES
212
213
240
LOOSEN BAND
200
211
HINGE ANGLE DECREASES
212
213
240
TIGHTEN BAND

EP 4 811 050 A1

## Description

## Technical Field

Embodiments of the disclosure relate to a wearable electronic device and an operating method thereof that may adjust wearing of an electronic device (e.g., wearable electronic device, smart watch, smart band) to be loosened or tightened (e.g., adjust fit of wearable electronic device) according to the activity state of a user and external environmental conditions (e.g., temperature, humidity).

## Background Art

An electronic device (e.g., wearable electronic device, smart watch, smart band) is an electronic device that may be worn on a body of a user due to its miniaturization and lightweight. The wearable electronic device is highly portable, which may lead to improving the convenience of use. The wearable electronic device has high proximity to the body of the user, so may be used for a variety of purposes. The wearable electronic device may include a plurality of sensors (e.g., motion sensor, proximity sensor, temperature sensor, and biometric sensor) to measure a state in which the wearable electronic device is worn on the body of the user (e.g., whether it is worn) and the user's movement and biometric information. The wearable electronic device may use sensors to identify proximity (or contact) to the body, and may determine whether the wearable device is worn and the movement of the user.

The contents described above are provided only as background information to help understanding of embodiments of the disclosure. No decision is made and no claim is made as to whether any of the above contents may be applied as the art in relation to the disclosure.

## Disclosure of Invention

## Solution to Problem

A flexible display may be applied to an electronic device (e.g., wearable electronic device, smart watch). The electronic device (e.g., wearable electronic device, smart watch) may be formed to wrap around at least a portion of the wrist of a user. The user may execute a function by touching a display (e.g., screen) of the electronic device (e.g., wearable electronic device, smart watch). Depending on the user's activity state (e.g., sleep, rest, exercise, swimming), the fit required by the user may vary. To adjust the fit of the electronic device (e.g., wearable electronic device, smart watch), the user may directly reduce or extend the length of a strap (e.g., band).

An embodiment of the disclosure may provide a wearable electronic device and an operating method thereof that may adjust the fit of an electronic device (e.g., wearable electronic device, smart watch, smart band) to be loosened or tightened (e.g., tight) according to the user's activity state (e.g., sleep, rest, exercise, swimming) and external environmental conditions (e.g., temperature, humidity).

An embodiment of the disclosure may provide a wearable electronic device and an operating method thereof that may display a user interface (e.g., content) on a display such that a user may intuitively recognize that the fit of an electronic device (e.g., wearable electronic device, smart watch, smart band) is adjusted.

An embodiment of the disclosure may provide an electronic device and an operating method thereof that provides a function capable of adjusting the fit of an electronic device (e.g., wearable electronic device, smart watch, smart band) to a default value and then fine-adjusting the fit according to the needs of the user.

The technical subjects to be achieved in this document are not limited to the above-described technical subjects, and still other technical subjects not mentioned herein will be clearly understood by one of ordinary skill in the art to which this document pertains from the following description.

An electronic device according to an embodiment of the disclosure may include a housing including a first housing structure, a second housing structure connected to the first housing structure, and a third housing structure; a first hinge driving module configured to connect the first side of the first housing structure and the second housing structure such that the first housing structure and the second housing structure are folded and unfolded; a second hinge driving module configured to connect the second side of the first housing structure and the third housing structure such that the first housing structure and the third housing structure are folded and unfolded; a hinge driving unit configured to drive the first hinge driving module and the second hinge driving module; a display arranged in the housing; a sensor module configured to sense the angle between the housing structures, and to sense the bending curvature of the display; a processor configured to control the operation of the display and the sensor module; and a memory including instructions. When the instructions are executed by the processor, the electronic device may detect a state in which it is worn on the wrist of a user using the sensor module. Based on detecting the state in which it is worn on the wrist of the user, the sensor module may be used to identify the activity state of the user. Based on the change in the activity state of the user, at least one of the angle

between the housing structures and the bending curvature of the display may be adjusted.

In an operating method of a wearable electronic device according to an embodiment of the disclosure, the wearable electronic device may include a housing including a first housing structure, a second housing structure connected to the first housing structure, and a third housing structure; a display arranged in the housing; a sensor module configured to sense the angle between housing structures, and to sense the bending curvature of the display; a memory including at least one storage medium storing instructions; and at least one processor including a processing circuit. The operating method may, when the instructions are executed by the at least one processor, cause the electronic device to detect a state in which the wearable electronic device is worn on the wrist of a user using the sensor module. The operating method may, when the instructions are executed by the at least one processor, cause the wearable electronic device to identify the activity state of the user using the sensor module based on detecting the state in which the wearable electronic device is worn on the wrist of the user. The operating method may, when the instructions are executed by the at least one processor, cause the wearable electronic device to adjust at least one of the angle between the housing structures and the bending curvature of the display based on the change in the activity state of the user.

In a recording medium storing instructions readable by at least one processor of a wearable electronic device according to an embodiment of the disclosure, the instructions may, when executed by the at least one processor, cause the wearable electronic device to detect a state in which the wearable electronic device is worn on the wrist of a user using a sensor module. The instructions may, when executed by the at least one processor, cause the wearable electronic device to identify the activity state of the user based on detecting the state in which the wearable electronic device is worn on the wrist of the user using the sensor module. The instructions may, when executed by the at least one processor, cause the wearable electronic device to perform an operation of adjusting at least one of the angle between housing structures and the bending curvature of the display based on the change in the activity state of the user.

A wearable electronic device and an operating method thereof according to an embodiment of the disclosure may display a user interface (e.g., content) on a display such that a user may intuitively recognize that the fit of an electronic device (e.g., wearable electronic device, smart watch, smart band) is adjusted.

A wearable electronic device and an operating method thereof according to an embodiment of the disclosure may provide a function capable of adjusting the fit of an electronic device (e.g., wearable electronic device, smart watch, smart band) to a default value and then fine-adjusting the fit according to the needs of the user.

The effects that may be achieved from the disclosure are not limited to the above-described effects and still other effects not mentioned herein will be clearly understood by one of ordinary skill in the art to which the disclosure pertains from the following description.

**Brief Description of Drawings**

In relation to description of drawings, the same or like reference numerals may be used for the same or like components.

FIG. 1 is a block diagram illustrating an electronic device in a network environment according to an embodiment of the disclosure.

FIG. 2a illustrates a wearable electronic device (e.g., wearable electronic device, smart watch, smart band) according to an embodiment of the disclosure.

FIG. 2b illustrates a housing and a hinge of an electronic device (e.g., wearable electronic device, smart watch, smart band).

FIG. 3a is a block diagram of an electronic device (e.g., wearable electronic device, smart watch, smart band) according to an embodiment of the disclosure.

FIG. 3b is a view observed from a rear surface (e.g., surface that comes into contact with wrist) of an electronic device (e.g., wearable electronic device, smart watch, smart band) according to an embodiment of the disclosure.

FIG. 4 is a block diagram of a display module illustrated in FIG. 3a.

FIG. 5 illustrates an example of adjusting the tightness degree (e.g., loosening or tightening) when an electronic device (e.g., wearable electronic device, smart watch, smart band) is worn on the wrist of a user according to an embodiment of the disclosure.

FIG. 6 illustrates an example of displaying (e.g., visually displaying) through a user interface that the tightness degree

(e.g., loosening or tightening) of an electronic device (e.g., wearable electronic device, smart watch, smart band) is adjusted for each situation.

FIG. 7 illustrates an example of providing a function that allows a user to manually adjust the tightness degree (e.g., loosening or tightening) of an electronic device (e.g., wearable electronic device, smart watch).

FIG. 8 illustrates an example of adjusting the tightness degree (e.g., loosening or tightening) of an electronic device (e.g., wearable electronic device, smart watch) due to the change in the angle of a hinge.

FIG. 9 illustrates an example of adjusting the tightness degree (e.g., loosening or tightening) of an electronic device (e.g., wearable electronic device, smart watch) due to the change in the bending curvature of a sub-display.

FIG. 10 illustrates an example of adjusting the tightness degree (e.g., loosening or tightening) of an electronic device (e.g., wearable electronic device, smart watch) due to the change in the angle of a hinge and the change in the bending curvature in a sub-display.

FIG. 11 is a flowchart illustrating an operating method of an electronic device (e.g., wearable electronic device, smart watch, smart band) according to an embodiment of the disclosure.

FIG. 12 illustrates an example of adjusting the tightness degree (e.g., loosening or tightening) of an electronic device (e.g., wearable electronic device, smart watch) in a sleep mode.

FIG. 13 illustrates an example of adjusting the tightness degree (e.g., loosening or tightening) of an electronic device (e.g., wearable electronic device, smart watch) in an exercise mode.

FIG. 14 is a flowchart illustrating an operating method of an electronic device (e.g., wearable electronic device, smart watch, smart band) according to an embodiment of the disclosure.

FIG. 15 illustrates an example of displaying (e.g., visually displaying) through a user interface that the tightness degree (e.g., loosening or tightening) of an electronic device (e.g., wearable electronic device, smart watch, smart band) is adjusted.

FIG. 16 illustrates an example of providing a fine adjustment menu such that a user may manually fine-adjust the tightness degree (e.g., loosening or tightening) of an electronic device (e.g., wearable electronic device, smart watch).

FIG. 17 illustrates an example of storing a fine adjustment value of the tightness degree (e.g., loosening or tightening) of an electronic device (e.g., wearable electronic device, smart watch) applied by a user, and automatically adjusting the tightness degree (e.g., loosening or tightening) of the electronic device (e.g., wearable electronic device, smart watch) using the fine adjustment value under the same conditions.

FIG. 18 illustrates an example of providing a function capable of releasing the tightness degree (e.g., loosening or tightening) of an automatically adjusted electronic device (e.g., wearable electronic device, smart watch) in a sleep mode.

FIG. 19 illustrates an example of providing a function capable of releasing the tightness degree (e.g., loosening or tightening) of an automatically adjusted electronic device (e.g., wearable electronic device, smart watch) in an exercise mode.

FIG. 20 illustrates an example of providing a function capable of releasing the tightness degree (e.g., loosening or tightening) of an automatically adjusted electronic device (e.g., wearable electronic device, smart watch) in a swimming mode.

FIG. 21 illustrates an example of providing a function capable of releasing the tightness degree (e.g., loosening or tightening) of an automatically adjusted electronic device (e.g., wearable electronic device, smart watch) in a biometric data (e.g., biometric information) measurement mode.

FIG. 22 is a flowchart illustrating an operating method of an electronic device (e.g., wearable electronic device, smart watch, smart band) according to an embodiment of the disclosure.

FIG. 23 is a flowchart illustrating an operating method of an electronic device (e.g., wearable electronic device, smart watch, smart band) according to an embodiment of the disclosure.

FIG. 24 is a flowchart illustrating an operating method of an electronic device (e.g., wearable electronic device, smart watch, smart band) according to an embodiment of the disclosure.

FIG. 25 is a flowchart illustrating an operating method of an electronic device (e.g., wearable electronic device, smart watch, smart band) according to an embodiment of the disclosure.

It should be noted that the same reference numerals are used to describe the same or similar elements, features, and structures throughout the drawings.

**Mode for the Invention**

The following description that refers to the accompanying drawings is provided to help comprehensive understanding of various embodiments of the disclosure as defined by the claims and equivalents thereof. It contains various specific details to help understanding, but should be regarded as illustrative only. Therefore, one of ordinary skill in the art will recognize that various modifications and changes may be made to various embodiments described herein without departing from the scope and spirit of the disclosure. Also, for clarity and conciseness, description of well-known functions and configuration may be omitted.

The terms and words used in the following description and claims are not limited to meanings in the literature, and are merely used by the applicant(s) to enable clear and consistent understanding of this document. Therefore, it should be clear to one of ordinary skill in the art that the following description of various embodiments of this document is provided for illustrative purposes only, not to limit this document as defined in the accompanying claims and equivalents thereof.

The singular form should be understood to include the plural form as well unless the context clearly indicates otherwise. Therefore, for example, mention to "component surface" may include mention to at least one of such surfaces.

**Industrial Applicability**

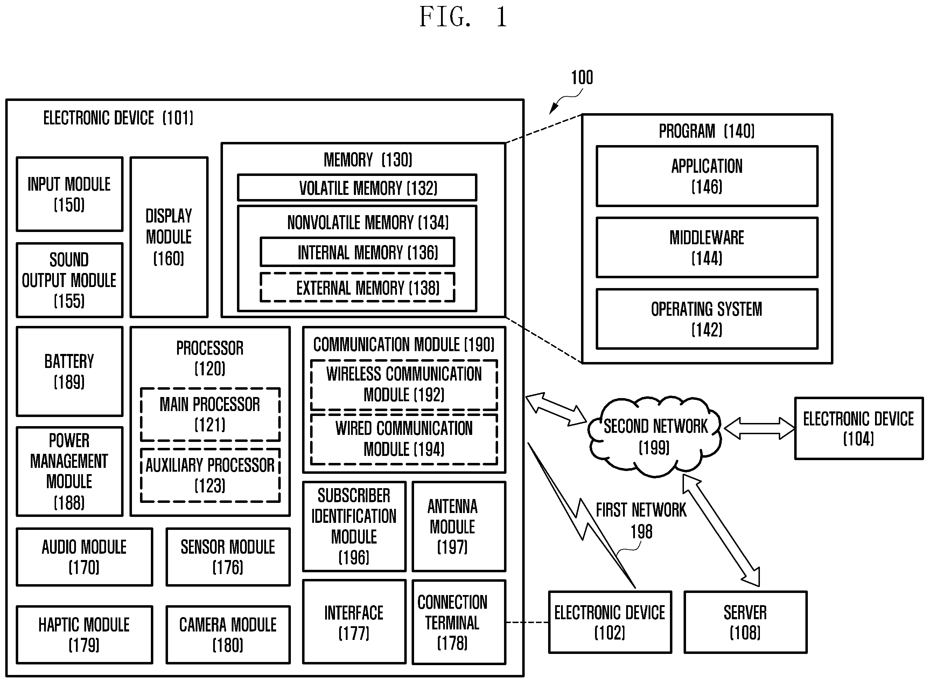

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the

electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power

management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the

external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

An electronic device according to various embodiments disclosed herein may be a device in various forms. The electronic device may include, for example, a portable communication device (e.g., smartphone), a computer device, a portable multimedia device, a portable medical device, a camera, a wearable device, or a home appliance device. The electronic device according to an embodiment herein is not limited to the above-described devices.

Various embodiments and terms used herein are not construed to limit technical features disclosed herein to specific embodiments, and should be understood to include various modifications, equivalents, or substitutions of a corresponding embodiment. In describing drawings, like reference numerals refer to like or related components. The singular forms "a," "an," and "the" of noun corresponding to an item are intended to include one item or a plurality of items, unless the context clearly indicates otherwise. Herein, each of the expressions, "A or B," "at least one of A and B," "at least one of A or B," "A, B, or C," "at least one of A, B, and C," "at least one of A, B, or C," and the like may include any possible combinations of items listed with a corresponding expression among the expressions. Terms "first," "second," etc., are simply used to distinguish one component from another component and do not limit the corresponding components in another aspect (e.g., importance or order). When a (e.g., first) component is described to be "coupled" or "connected to" another (e.g., second) component along with the term "functionally" or "communicatively," the component may be directly (e.g., wiredly) connected to the other component or may be connected through a third component.

The term "module" used in various embodiments herein may include a unit implemented as hardware, software, or firmware, and may be interchangeably used with the terms, for example, logic, logic block, part, and circuit. The module may be an integrally configured part or a minimal unit of the part that performs one or more functions or a portion thereof. For example, according to an embodiment, the module may be implemented in a form of an application-specific integrated circuit (ASIC).

Various embodiments disclosed herein may be implemented as software (e.g., program 140) that includes one or more commands stored in a storage medium (e.g., internal memory 136 or external memory 138) readable by a machine (e.g., electronic device 101). For example, a processor (e.g., processor 120) of the machine (e.g., electronic device 101) may call and execute at least one command among the one or more commands stored in the storage medium, which enables the device to operate to perform at least one function in response to the called at least one command. The one or more commands may include a code generated by a compiler or a code executable by an interpreter. The storage medium readable by the device may be provided in the form of a non-transitory storage medium. Here, "non-transitory" simples indicates that the storage medium is a tangible device and does not include a signal (e.g., electromagnetic wave). This term does not distinguish a case in which data is semi-permanently stored in the storage medium from a case in which the data is transitorily stored in the storage medium.

According to an embodiment, the method according to various embodiments disclosed herein may be included in a computer program product and thereby provided. The computer program product may be traded between a seller and a purchaser. The computer program product may be distributed in a form of a storage medium readable by machine (e.g., compact disc read only memory (CD-ROM)) or may be distributed (e.g., downloaded or uploaded) directly or online through an application store (e.g., PlayStoreTM) or between two user devices (e.g., smartphones). In the case of online distribution, at least a portion of the computer program product may be at least transitorily stored or temporarily generated in a server of a manufacturer, a server of application store, or a storage medium readable by machine such as a memory of a repeater server.

According to various embodiments, each component (e.g., module or program) of the above-described components may include a single entity or multiple entities, and some of the multiple entities may be separately arranged in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar

manner as they are performed by a corresponding one of the plurality of components before the integration. According to various embodiments, operations performed by the module, the program, or another component may be carried out sequentially, in parallel, repeatedly, or heuristically, or one or more of the operations may be executed in different order or omitted, or one or more other operations may be added.

According to an embodiment, the processor 120 (e.g., processing circuit) may be implemented as at least one integrated circuit (IC) (or circuitry) chip. the processor 120 may include at least one electrical circuit, and may individually or collectively process instructions (or program, data) stored in the memory 130 in a distributed manner. The processor 120 may include a processor assembly that includes one or more processing circuits. The processor 120 may include operative any processing circuit to control performance and operations of one or more components (e.g., memory 130, display module 160, sensor module 176 (e.g., sensor), camera module 180 (e.g., image sensor), and/or communication module 190 (e.g., communication circuit)) of the electronic device 101. For example, the processor 120 (e.g., application processor (AP)) may be implemented as a system on chip (SoC) (e.g., single chip or chipset). For example, the processor 120 may be implemented as a plurality of cores (or at least one core circuit), a plurality of chips, or a plurality of chipsets. For example, the processor 120 may include one or more processing circuits. For example, the processor 120 may include one or more processing circuits configured to individually and/or collectively perform various functions of the disclosure. As a non-limiting example, at least a portion of the processor 120 may be included in a first chip of the electronic device 101, and at least another portion of the processor 120 may be included in a second chip of the electronic device 101 that is different from the first chip of the electronic device 101.

According to an embodiment, the electronic device 101 illustrated in FIG. 1 may include a wearable electronic device, a smart watch, an augmented reality (AR) electronic device, a virtual reality (VR) electronic device, a mobile phone (e.g., smart phone), a laptop personal computer (PC), a tablet PC, and/or an audio electronic device (e.g., wired earphone, wireless earphone).

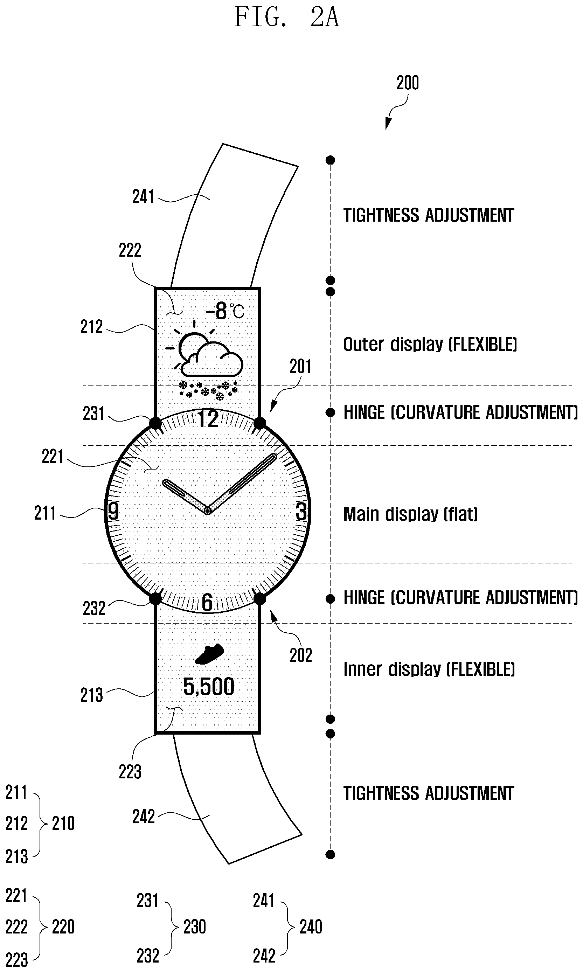

According to an embodiment, the display module 160 illustrated in FIG. 1 may include a display (e.g., display 220 of FIG. 2a). For example, the display 220 may include a first display (e.g., first display 221 of FIG. 2a, main display, center display, main display area), a second display (e.g., second display 222 FIG. 2a, first sub-display, first sub-display area, outer display), and a third display (e.g., third display 223 of FIG. 2a, second sub-display, second sub-display area, inner display).

For example, the first display 221 may include a bar typed or plate typed display (e.g., organic light emitting diode (OLED) display). For example, the first display 221 may include a flexible display (e.g., flexible OLED display) configured to fold or unfold a screen (e.g., display screen).

For example, the second display 222 may include a bar typed or plate typed display (e.g., OLED display). For example, the second display 222 may include a flexible display (e.g., flexible OLED display) configured to fold or unfold the screen (e.g., display screen).

For example, the third display 223 may include a bar typed or plate typed display (e.g., OLED display). For example, the third display 223 may include a flexible display (e.g., flexible OLED display) configured to fold or unfold the screen (e.g., display screen).

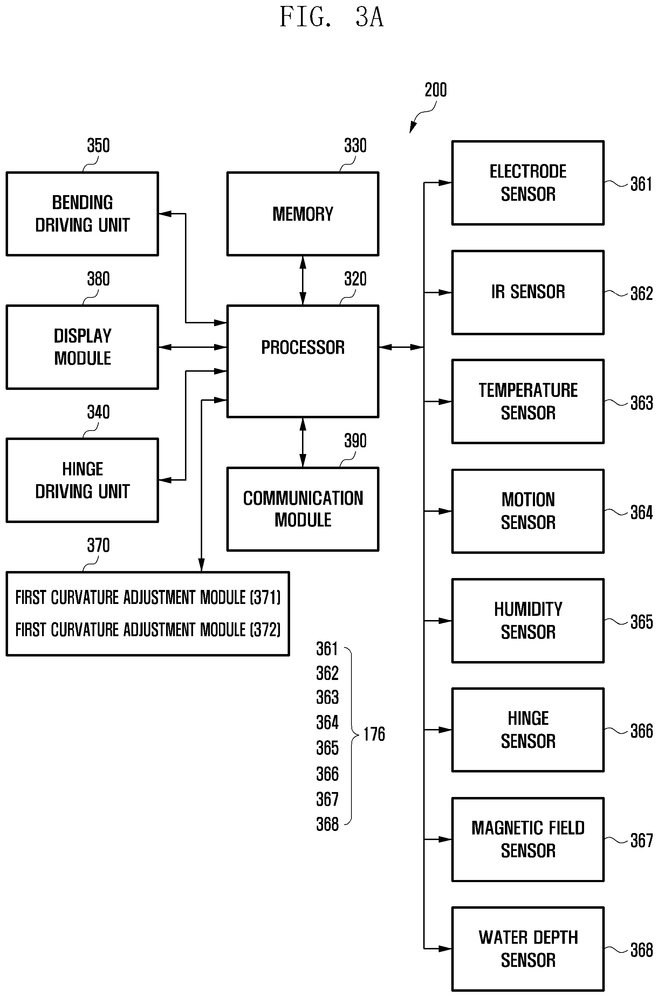

According to an embodiment, the sensor module 176 may include an electrical proximity sensor (e.g., electrode sensor 361 of FIG. 3a). For example, the sensor module 176 may include an optical proximity sensor (e.g., optical sensor) (e.g., photoplethysmogram sensor (PPG sensor) (e.g., IR sensor 362 FIG. 3a)). For example, the sensor module 176 may include a temperature sensor (e.g., temperature sensor 363 FIG. 3a) that may measure the user's skin temperature and body temperature, and external temperature. For example, the sensor module 176 may include a motion sensor (e.g., motion sensor 364 of FIG. 3a) that may measure movement of the electronic device 101 (e.g., electronic device 200 of FIG. 2a, wearable electronic device). The motion sensor 364 may include a 6-axis sensor and an acceleration sensor that may measure the movement of the electronic device 101, 200 (e.g., wearable electronic device) and the angle at which the electronic device 101, 200 is worn on the user's body (e.g., wrist).

According to an embodiment, the sensor module 176 may sense the angle between structures of a housing 210 and the curvature of the second display 222 (e.g., first sub-display, outer display).

For example, the motion sensor (6-axis sensor & acceleration sensor) may be used to measure the curvature of the second display 222 (e.g., first sub-display, outer display) and to acquire a curvature value. The electronic device 101, 200 (e.g., wearable electronic device) may change the curvature of the second display 222 (e.g., first sub-display, outer display) based on the curvature value of the second display 222 (e.g., first sub-display, outer display).

According to an embodiment, the sensor module 176 my sense the angle between the structures of the housing 210, and may sense the curvature of the third display 223 (e.g., second sub-display, inner display).

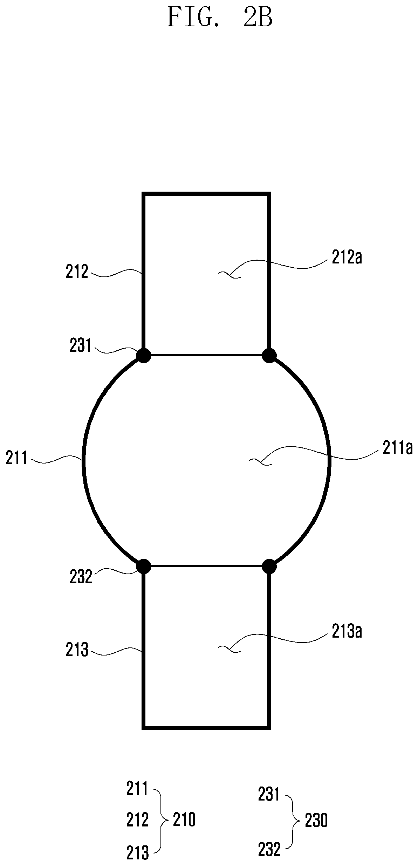

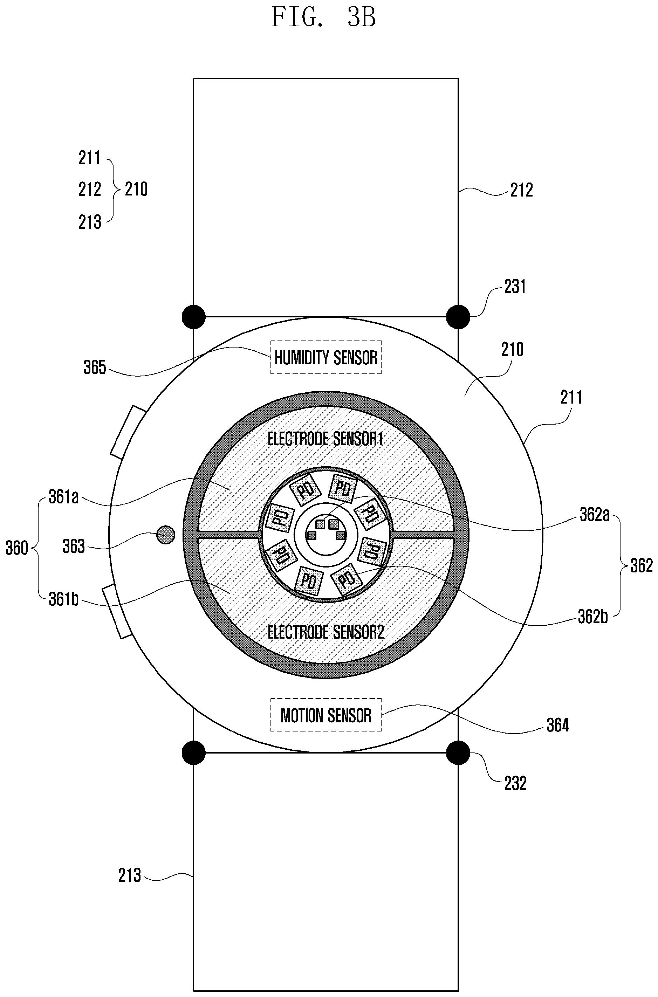

For example, the motion sensor (6-axis sensor & acceleration sensor) may be used to measure the curvature of the third display 223 (e.g., second sub-display, inner display) and may acquire a curvature value. The electronic device 101, 200 (e.g., wearable electronic device) may change the curvature of the third display 223 (e.g., second sub-display, inner display) based on the curvature value of the third display 223 (e.g., second sub-display, inner display). For example, the motion sensor 364 may include a location measurement sensor (e.g., global positioning system (GPS) sensor) that

may measure a location of the electronic device 101, 200 (e.g., wearable electronic device). For example, the sensor module 176 may include a humidity sensor (e.g., humidity sensor 365 of FIG. 3a) that may measure the humidity of the user's skin and external humidity. For example, the sensor module 176 may include a hinge sensor (e.g., hinge sensor 366 of FIG. 3a) that may measure the movement angle of a first hinge (e.g., first hinge driving module 231 of FIG. 2a and FIG. 2b) configured to connect the first housing (e.g., first housing 211 of FIG. 2a and FIG. 2b) and the second housing (e.g., second housing 212. of FIG. 2a and FIG. 2b) of the electronic device 101, 200 (e.g., wearable electronic device). For example, the sensor module 176 may include a hinge sensor (e.g., hinge sensor 366 of FIG. 3a) that may measure the movement angle of a second hinge driving module (e.g., second hinge driving module 232 of FIG. 2a and FIG. 2b) configured to connect the first housing (e.g., first housing 211 of FIG. 2a and FIG. 2b) and the third housing (e.g., third housing 213 FIG. 2a and FIG. 2b) of the electronic device 101, 200 (e.g., wearable electronic device). For example, the sensor module 176 may include a magnetic field sensor (e.g., magnetic field sensor 367 of FIG. 3a, hall sensor) that may measure the angle between the first housing 211 and the second housing 212 (e.g., angle formed by folding and unfolding of first housing 211 and second housing 212). For example, the sensor module 176 may include a magnetic field sensor (e.g., magnetic field sensor 367 of FIG. 3a, hall sensor) that may measure the angle between the first housing 211 and the third housing 213 (e.g., angle formed by folding and unfolding of first housing 211 and third housing 213). For example, the sensor module 176 may include a water depth sensor (e.g., FIG. 3a의 water depth sensor 368) that may measure the depth of water when the electronic device 101, 200 (e.g., wearable electronic device) is present in water. For example, the sensor module 176 may include an altitude sensor that may measure the height of a location at which the electronic device 101, 200 (e.g., wearable electronic device) is present. For example, the sensor module 176 may include a barometric sensor that may measure the barometric pressure of a location at which the electronic device 101, 200 (e.g., wearable electronic device) is present.

FIG. 2a illustrates a wearable electronic device (e.g., smart watch, smart band) according to an embodiment of the disclosure.

FIG. 2b illustrates a housing and a hinge of an electronic device (e.g., wearable electronic device, smart watch, smart band).

With reference to FIG. 2a and FIG. 2b, the electronic device 200 (e.g., wearable electronic device, smart watch, smart band) according to an embodiment of the disclosure may include a first surface (e.g., surface on which screen of display 220 is displayed), a second surface (e.g., rear surface, surface that comes into contact with skin of person), and a third surface (e.g., side surface) arranged to surround the space between the first surface (e.g., surface on which screen of display 220 is displayed) and the second surface (e.g., rear surface, surface that comes into contact with skin of person).

The electronic device 200 (e.g., electronic device 101 of FIG. 1, wearable electronic device, smart watch, smart band) according to an embodiment of the disclosure may include the housing 210, a display module (e.g., display module 160 of FIG. 1, display module 380 of FIG. 3a) including the display 220, a fastening member 240 configured to fasten the electronic device 200 to the wrist of the user, and driving circuits configured to operate the electronic device 200. The driving circuits of the electronic device 200 may reference detailed description of FIG. 3a and FIG. 3b.

According to an embodiment, the electronic device 200 (e.g., wearable electronic device, smart watch, smart band) illustrated in FIG. 2a may include a wearable electronic device (e.g., smart watch).

According to an embodiment, the electronic device 200 (e.g., wearable electronic device, smart watch, smart band) illustrated in FIG. 2a may include an augmented reality (AR) electronic device, a virtual reality (VR) electronic device, a mobile phone (e.g., smartphone), a laptop personal computer (PC), a tablet PC, and/or an audio electronic device (e.g., wired earphone, wireless earphone).

According to an embodiment, the housing 210 may include the first housing 211 (e.g., main housing, center housing), the second housing 212 (e.g., first sub-housing, outer housing), and the third housing 213 (e.g., second sub-housing, inner housing).

For example, the first housing 211 (e.g., main housing) may be arranged between the second housing 212 (e.g., first sub-housing) and the third housing 213 (e.g., second sub-housing).

For example, the first side 201 of the first housing 211 (e.g., main housing) may be connected to the second housing 212 (e.g., first sub-housing). The first housing 211 (e.g., main housing) and the second housing 212 (e.g., first sub-housing) may be connected by way of the first hinge driving module 231.

For example, the second side 202 of the first housing 211 (e.g., main housing) may be connected to the third housing 213 (e.g., second sub-housing). The first housing 211 (e.g., main housing) and the third housing 213 (e.g., second sub-housing) may be connected by way of the second hinge driving module 232.

According to an embodiment, a hinge 230 may include the first hinge driving module 231 and the second hinge driving module 232.

For example, the first hinge driving module 231 may connect the first housing 211 (e.g., main housing) and the second housing 212 (e.g., first sub-housing). The angle formed by the first housing 211 (e.g., main housing) and the second housing 212 (e.g., first sub-housing) may be changed by way of the first hinge driving module 231. The first housing

211 (e.g., main housing) and the second housing 212 (e.g., first sub-housing) may be folded or unfolded by way of the first hinge driving module 231. For example, the first hinge driving module 231 may be driven by way of a hinge driving unit (e.g., hinge driving unit 340 of FIG. 3a).

For example, the second hinge driving module 232 may connect the first housing 211 (e.g., main housing) and the third housing 213 (e.g., second sub-housing). The angle formed by the first housing 211 (e.g., main housing) and the third housing 213 (e.g., second sub-housing) may be changed by way of the second hinge driving module 232. The first housing 211 (e.g., main housing) and the third housing 213 (e.g., second sub-housing) may be folded or unfolded by way of the second hinge driving module 232. For example, the second hinge driving module 232 may be driven by way of a hinge driving unit (e.g., hinge driving unit 340 of FIG. 3a).

According to an embodiment, the fastening member 240 may include a strap that wraps around and fastens the electronic device 200 (e.g., wearable electronic device, smart watch, smart band) to the wrist of the user.

For example, the first side 241 of the strap-shaped fastening member 240 may be connected to the second housing 212 (e.g., first sub-housing). The second side 242 of the strap-shaped fastening member 240 may be connected to the third housing 213 (e.g., second sub-housing). For example, the first side 241 and the second side 242 of the fastening member 240 may be separable straps that are separated from each other but connectable by a connecting method.

According to an embodiment, the fastening member 240 may include a band (e.g., elastic band) that wraps around and fastens the electronic device 200 (e.g., wearable electronic device, smart watch, smart band) to the wrist of the user.

For example, the first side 241 of the elastic band-shaped fastening member 240 may be connected to the second housing 212 (e.g., first sub-housing). The second side 242 of the elastic band-typed fastening member 240 may be connected to the third housing 213 (e.g., second sub-housing). For example, the first side 241 and the second side 242 of the fastening member 240 may be a single elastic band that is connected to each other.

According to an embodiment, the display 220 may include the first display 221 (e.g., main display, center display), the second display 222 (e.g., first sub-display, outer display), and the third display 223 (e.g., second sub-display, inner display).

For example, the first display 221 (e.g., main display, center display) may be arranged in a first space 211a formed by the first housing 211 (e.g., main housing, center housing). For example, the first display 221 (e.g., main display, center display) may be supported by the first housing 211 (e.g., main housing, center housing).

For example, the second display 222 (e.g., first sub-display) may be arranged in a second space 212a formed by the second housing 212 (e.g., first sub-housing). For example, the second display 222 (e.g., first sub-display) may be supported by the second housing 212 (e.g., first sub-housing).

For example, the third display 223 (e.g., second sub-display) may be arranged in a third space 213a formed by the third housing 213 (e.g., second sub-housing). For example, the third display 223 (e.g., second sub-display) may be supported by the third housing 213 (e.g., second sub-housing).

According to an embodiment, the first display 221 (e.g., main display, center display, main display area), the second display 222 (e.g., first sub-display, first sub-display area), and the third display 223 (e.g., second sub-display, second sub-display area) may be manufactured as a single flexible display and arranged in the housing 210. By dividing an area of a single flexible display, each of the first display 221 (e.g., main display, center display, main display area), the second display 222 (e.g., first sub-display, first sub-display area), and the third display 223 (e.g., second sub-display, second sub-display area) may operate as an independent display.

For example, each of the first display 221 (e.g., main display, center display, main display area), the second display 222 (e.g., first sub-display, first sub-display area), and the third display 223 (e.g., second sub-display, second sub-display area) may operate as an independent display, and may display different content.

For example, the first display 221 (e.g., main display, center display, main display area), the second display 222 (e.g., first sub-display, first sub-display area), and the third display 223 (e.g., second sub-display, second sub-display area) may split and display a single piece of content by operating in conjunction with each other.

According to an embodiment, the first display 221 (e.g., main display, center display, main display area), the second display 222 (e.g., first sub-display, first sub-display area), and the third display 223 (e.g., second sub-display, second sub-display area) may be manufactured as displays that are separated from each other, and may be arranged in the housing 210.

For example, when viewed from the outside, the first display 221 (e.g., main display, center display, main display area), the second display 222 (e.g., first sub-display, first sub-display area), and the third display 223 (e.g., second sub-display, second sub-display area) may be viewed as a single connected display.

For example, when viewed from the outside, the first display 221 (e.g., main display, center display, main display area), the second display 222 (e.g., first sub-display, first sub-display area), and the third display 223 (e.g., second sub-display, second sub-display area) may be viewed as displays that are separated from each other.

For example, each of the first display 221 (e.g., main display, center display, main display area), the second

display 222 (e.g., first sub-display, first sub-display area), and the third display 223 (e.g., second sub-display, second sub-display area) may operate as an independent display.

For example, each of the first display 221 (e.g., main display, center display, main display area), the second display 222 (e.g., first sub-display, first sub-display area), and the third display 223 (e.g., second sub-display, second sub-display area) may operate as an independent display and may display different content.

For example, the first display 221 (e.g., main display, center display, main display area), the second display 222 (e.g., first sub-display, first sub-display area), and the third display 223 (e.g., second sub-display, second sub-display area) may split and display a single piece of content by operating in conjunction with each other.

For example, the first display 221 (e.g., main display, center display, main display area) may include a bar typed or plate typed display (e.g., organic light emitting diode (OLED) display). For example, the first display 221 (e.g., main display, center display, main display area) may include a flexible display (e.g., flexible OLED display) configured to fold or unfold the screen (e.g., display screen).

For example, the second display 222 (e.g., first sub-display, first sub-display area) may include a bar typed or plate typed display (e.g., OLED display). For example, the second display 222 (e.g., first sub-display, first sub-display area) may include a flexible display (e.g., flexible OLED display) configured to fold or unfold the screen (e.g., display screen).

For example, the third display 223 (e.g., second sub-display, second sub-display area) may include a bar typed or plate typed display (e.g., OLED display). For example, the third display 223 (e.g., second sub-display, second sub-display area) may include a flexible display (e.g., flexible OLED display) configured to fold or unfold the screen (e.g., display screen).

According to an embodiment, the electronic device 200 (e.g., wearable electronic device, smart watch, smart band) may adjust the bending curvature of the first display 221 (e.g., main display, center display, main display area), the second display 222 (e.g., first sub-display, first sub-display area), and the third display 223 (e.g., second sub-display, second sub-display area).

For example, the electronic device 200 (e.g., wearable electronic device, smart watch, smart band) may adjust the bending curvature of the first display 221 (e.g., main display, center display, main display area) such that the first display 221 (e.g., main display, center display, main display area) has a flat shape. For example, the electronic device 200 (e.g., wearable electronic device, smart watch, smart band) may adjust the bending curvature of the first display 221 (e.g., main display, center display, main display area) such that the first display 221 (e.g., main display, center display, main display area) has a curved shape (e.g., shape curved to fit shape of wrist). For example, the bending curvature of the first display 221 (e.g., main display, center display, main display area) may be controlled by a bending driving unit (e.g., bending driving unit 350 of FIG. 3a).

For example, the electronic device 200 (e.g., wearable electronic device, smart watch, smart band) may adjust the bending curvature of the second display 222 (e.g., first sub-display, first sub-display area) such that the second display 222 (e.g., first sub-display, first sub-display area) has a flat shape. For example, the electronic device 200 (e.g., wearable electronic device, smart watch, smart band) may adjust the bending curvature of the second display 222 (e.g., first sub-display, first sub-display area) such that the second display 222 (e.g., first sub-display, first sub-display area) has a curved shape (e.g., shape curved to fit shape of wrist). For example, the bending curvature of the second display 222 (e.g., first sub-display, first sub-display area) may be controlled by the bending driving unit (e.g., bending driving unit 350 of FIG. 3a).

For example, the electronic device 200 (e.g., wearable electronic device, smart watch, smart band) may adjust the bending curvature of the third display 223 (e.g., second sub-display, second sub-display area) such that the third display 223 (e.g., second sub-display, second sub-display area) has a flat shape. For example, the electronic device 200 (e.g., wearable electronic device, smart watch, smart band) may adjust the bending curvature of the third display 223 (e.g., second sub-display, second sub-display area) such that the third display 223 (e.g., second sub-display, second sub-display area) has a curved shape (e.g., shape curved to fit shape of wrist). For example, the bending curvature of the third display 223 (e.g., second sub-display, second sub-display area) may be controlled by the bending driving unit (e.g., bending driving unit 350 of FIG. 3a).

In this way, by adjusting the bending curvature of at least a portion of the display 220, when the electronic device 200 (e.g., wearable electronic device, smart watch, smart band) is worn on the wrist of the user, the electronic device 200 may be adjusted to be worn loosely or to be worn tightly.

According to an embodiment, the electronic device 200 (e.g., wearable electronic device, smart watch, smart band) may drive the first hinge driving module 231 to adjust the angle formed by the first housing 211 (e.g., main housing) and the second housing 212 (e.g., first sub-housing). The electronic device 200 (e.g., wearable electronic device, smart watch, smart band) may drive the second hinge driving module 232 to adjust the angle formed by the first housing 211 (e.g., main housing) and the third housing 213 (e.g., second sub-housing).

In this way, when the electronic device 200 (e.g., wearable electronic device, smart watch, smart band) is worn on the wrist of the user, the hinge 230 may be driven to adjust the angle of the housing 210 and the electronic device 200 may be controlled to be worn loosely or to be worn tightly.

According to an embodiment, the electronic device 200 (e.g., wearable electronic device, smart watch, smart

band) may drive the hinge 230 to adjust the angle of the housing 210 and to adjust the bending curvature of at least a portion of the display 220, and the electronic device 200 may be controlled to be worn loosely or to be worn tightly.

FIG. 3a is a block diagram of an electronic device (e.g., wearable electronic device, smart watch, smart band) according to an embodiment of the disclosure.

FIG. 3b is a view observed from a rear surface (e.g., surface that comes into contact with wrist) of an electronic device (e.g., wearable electronic device, smart watch, smart band) according to an embodiment of the disclosure.

With reference to FIG. 3a and FIG. 3b, according to an embodiment, the electronic device 200 (e.g., wearable electronic device, smart watch, smart band) according to an embodiment of the disclosure may include driving circuits.

According to an embodiment, driving circuits of the electronic device 200 (e.g., wearable electronic device, smart watch, smart band) may include a processor 320 (e.g., processor 120 of FIG. 1), a memory 330 (e.g., memory 130 of FIG. 1), the hinge driving unit 340, the bending driving unit 350, the sensor module 176 (e.g., sensor module 176 of FIG. 1, sensor circuit), a curvature adjustment module 370, the display module 380 (e.g., display module 160 of FIG. 1), and a communication module 390 (e.g., communication module 190 of FIG. 1).

According to an embodiment, the processor 320, the memory 330, the sensor module 176, the hinge driving unit 340, the bending driving unit 350, the display module 380, and the communication module 390 may be arranged in an internal space formed by the housing 210 of the electronic device 200 (e.g., wearable electronic device, smart watch, smart band).

According to an embodiment, the electronic device 200 (e.g., wearable electronic device, smart watch, smart band) according to an embodiment of the disclosure may include a battery (e.g., battery 189 of FIG. 1) configured to supply power for operation of the electronic device. For example, the battery 189 may include a non-rechargeable primary cell, a rechargeable secondary cell, or a fuel cell. The battery 189 may be integrally provided inside the electronic device 200, or may be detachably provided to the electronic device 200.

According to an embodiment, the sensor module 176 may include an electrical proximity sensor (e.g., electrode sensor 361 of FIG. 3a).

For example, the sensor module 176 may include an optical proximity sensor (e.g., optical sensor) (e.g., photoplethysmogram sensor (PPG sensor)) (e.g., IR sensor 362 of FIG. 3a).

For example, the sensor module 176 may include a temperature sensor (e.g., temperature sensor 363 of FIG. 3a) that may measure the user's skin temperature and body temperature, and external temperature.

For example, the sensor module 176 may include a motion sensor (e.g., motion sensor 364 of FIG. 3a) that may measure the movement of the electronic device 101 (e.g., electronic device 200 of FIG. 2a, wearable electronic device, smart watch, smart band). The motion sensor 364 may include a 6-axis sensor and an acceleration sensor that may measure movement of the electronic device 101, 200 and the angle at which the electronic device 101, 200 is worn on the user's body (e.g., wrist). The motion sensor 364 may include a location measurement sensor (e.g., global positioning system (GPS) sensor) that may measure a location of the electronic device 101, 200.

For example, the sensor module 176 may include the humidity sensor 365 that may measure the humidity of the user's skin and external humidity.

For example, the sensor module 176 may include the hinge sensor 366 that may measure the movement angle of the first hinge driving module (e.g., first hinge driving module 231 of FIG. 2a and FIG. 2b) connecting the first housing (e.g., first housing 211 of FIG. 2a and FIG. 2b) and the second housing (e.g., second housing 212 of FIG. 2a and FIG. 2b) of the electronic device 101, 200 (e.g., wearable electronic device, smart watch, smart band). For example, the hinge sensor 366 may be embedded in a first hinge driving module (e.g., first hinge driving module 231 of FIG. 2a and FIG. 2b) and may measure the movement angle of the first hinge driving module 231. For example, the sensor module 176 may include the hinge sensor 366 that may measure the movement angle of the second hinge (e.g., second hinge driving module 232 of FIG. 2a and FIG. 2b) connecting the first housing (e.g., first housing 211 of FIG. 2a and FIG. 2b) and the third housing (e.g., third housing 213 of FIG. 2a and FIG. 2b) of the electronic device 101, 200.

For example, the hinge sensor 366 may be embedded in the second hinge driving module (e.g., second hinge driving module 232 of FIG. 2a and FIG. 2b) and may measure the movement angle of the second hinge driving module 232.

For example, the sensor module 176 may include the magnetic field sensor 367 (e.g., hall sensor) that may measure the angle between the first housing 211 and the second housing 212 (e.g., angle formed by folding and unfolding of first housing 211 and second housing 212).

For example, the sensor module 176 may include the magnetic field sensor 367 (e.g., hall sensor) that may measure the angle between the first housing 211 and the third housing 213 (e.g., angle formed by folding and unfolding of first housing 211 and third housing 213).

For example, when the electronic device 101, 200 (e.g., wearable electronic device, smart watch, smart band) is present in water, the sensor module 176 may include the water depth sensor 368 that may measure the depth of water.

For example, the sensor module 176 may include the altitude sensor that may measure the height of a location at which the electronic device 101, 200 (e.g., wearable electronic device, smart watch, smart band) is present. For example, the sensor module 176 may include the barometric sensor that may measure the barometric pressure of a location at which

the electronic device 101, 200 is present.

For example, at least a portion of the sensor module 176 may be arranged to face the first surface (e.g., front surface, surface on which screen is displayed) of the electronic device 101, 200 (e.g., wearable electronic device, smart watch, smart band). For example, at least a portion of the sensor module 176 may be arranged to face the second surface (e.g., rear surface, surface that comes into skin of user) of the electronic device 101, 200. For example, at least a portion of the sensor module 176 may be arranged in the first housing 211. For example, at least a portion of the sensor module 176 may be arranged in the second housing 212. For example, at least a portion of the sensor module 176 may be arranged in the third housing 213. For example, at least a portion of the sensor module 176 may be arranged in the first display 221. For example, at least a portion of the sensor module 176 may be arranged in the second display 222. For example, at least a portion of the sensor module 176 may be arranged in the third display 223.

According to an embodiment, the electrode sensor 361 (e.g., electrical proximity sensor), the IR sensor 362 (e.g., optical proximity sensor), and the temperature sensor 363 (e.g., contact-free temperature sensor) may be provided to face the second surface (e.g., rear surface, surface that comes into contact with human skin) of the electronic device 200 (e.g., wearable electronic device, smart watch, smart band).

For example, the electrode sensor 361 (e.g., electrical proximity sensor), the IR sensor 362 (e.g., optical proximity sensor), and the temperature sensor 363 (e.g., contact-free temperature sensor) may be provided to be adjacent to a rear plate of the wearable electronic device 200.

According to an embodiment, the motion sensor 364 may be arranged in an internal space of the electronic device 200 (e.g., wearable electronic device, smart watch, smart watch), and may not be visible from the outside.

According to an embodiment, a display (e.g., display 210 of FIG. 2a) of the display module 280 may be provided to face the second surface (e.g., surface on which screen is displayed) of the electronic device 200 (e.g., wearable electronic device, smart watch, smart band). For example, the display 210 may be exposed to be visually visible. A shape of the display 210 may be formed to correspond to a frontal shape of the housing 210.

For example, the first display 221 (e.g., main display, center display, main display area) may be in the shape of a circle, an ellipse, or a polygon.

For example, the second display 222 (e.g., first sub-display, first sub-display area) may be in the shape of a circle, an ellipse, or a polygon.

For example, third display 223 (e.g., second sub-display, second sub-display area) may be in the shape of a circle, an ellipse, or a polygon.

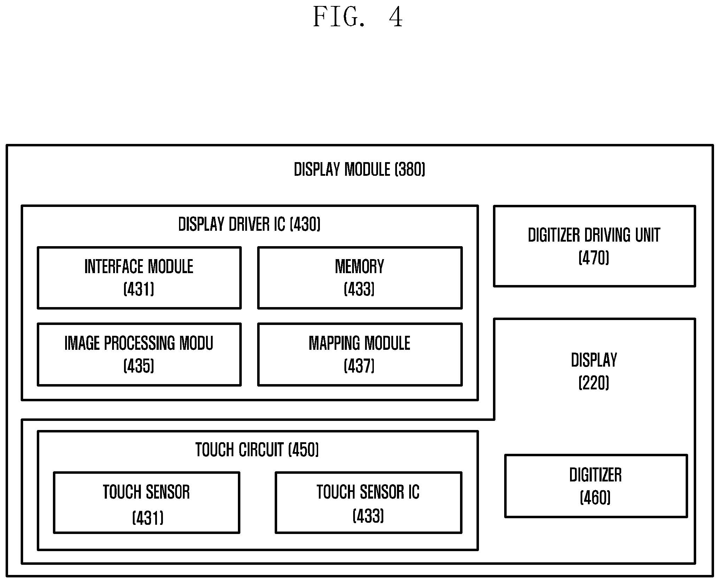

According to an embodiment, the display module 380 may include a touch circuit (touch circuit 450 of FIG. 4). Presence or absence of touch and intensity (pressure) of touch may be measured through the touch circuit 450. A touch sensor (e.g., touch sensor 451 of FIG. 4) of the touch circuit 450 may be combined with or provided to be adjacent to a pressure sensor and/or a fingerprint sensor.

According to an embodiment, the processor 320 of the electronic device 200 (e.g., wearable electronic device, smart watch, smart band) according to an embodiment of the disclosure may include one or more of a central processing unit, an application processor, a graphics processing unit (GPU), an application processor, a sensor processor, and a communication processor. For example, the processor 320 may control the operation of the communication module 390 to operate in conjunction with an external electronic device and/or an external wearable electronic device.

According to an embodiment, the processor 320 (e.g., processing circuit) may be implemented as at least one integrated circuit (or circuitry) (IC) chip, and may execute various data processing. The processor 320 may include at least one electrical circuit, and may individually or collectively distribute and process instructions (or program, data) stored in the memory 330. For example, the processor 320 may include at least some components of the processor 120 of FIG. 1, and may perform at least some operations of the processor 120 of FIG. 1.

According to an embodiment, the memory 330 of the electronic device 200 (e.g., wearable electronic device, smart watch, smart band) according to an embodiment of the disclosure may include a volatile memory and/or nonvolatile memory. For example, the memory 330 may include instructions for performing the operation of the processor 320. Also, the memory 330 may include instructions for performing the operation of the electrode sensor 361, the IR sensor 362, the temperature sensor 363, the motion sensor 364, the humidity sensor 365, the hinge sensor 366, the magnetic field sensor 367, the water depth sensor 368, the display module 380, and/or the communication module 390.

According to an embodiment, the electronic device 200 (e.g., wearable electronic device, smart watch, smart band) according to an embodiment of the disclosure may be worn on the user's body (e.g., wrist). The electronic device 200 (e.g., wearable electronic device, smart watch, smart band) may operate in conjunction with the external electronic device (e.g., smart phone, tablet PC, laptop PC) and/or the external wearable electronic device (e.g., audio electronic device, wireless earphones).

According to an embodiment, the processor 320 of the electronic device 200 (e.g., wearable electronic device, smart watch, smart band) according to an embodiment of the disclosure may control the operation of at least one of the electrode sensor 361, the IR sensor 362, the temperature sensor 363, the motion sensor 364, the humidity sensor 365, the hinge sensor 366, the magnetic field sensor 367, and water depth sensor 368 to acquire the user's movement signal, an

angle at which the electronic device 200 is worn on the user's wrist, an exercise signal, a health-related signal, a biometric signal (e.g., hearth rate, blood pressure, oxygen saturation, blood sugar, skin temperature, and/or body temperature), a humidity signal, a water depth signal, and an altitude signal.

According to an embodiment, the processor 320 of the electronic device 200 (e.g., wearable electronic device, smart watch, smart band) according to an embodiment of the disclosure may adjust the electronic device 200 (e.g., wearable electronic device, smart watch, smart band) to be worn loosely or tightly (e.g., adjust fit of wearable electronic device) based on at least one of a movement signal, a signal of angle at which the electronic device 200 is worn on the user's wrist, an exercise signal, a health-related signal, a biometric signal (e.g., heart rate, blood pressure, oxygen saturation, blood sugar, skin temperature, and/or body temperature), a humidity signal, a water depth signal, and an altitude signal that are acquired by operating the electrode sensor 361, the IR sensor 362, the temperature sensor 363, the motion sensor 364, the humidity sensor 365, the hinge sensor 366, the magnetic field sensor 367, and the water depth sensor 368.

According to an embodiment, the electrode sensor 361 may include at least one of an electrocardiograph (ECG) sensor, an electrical wear sensor, and an electrical proximity sensor. The electrode sensor 361 may acquire a biometric signal of the user based on the electrical signal in a circuit that detects a biometric signal. The biometric signal acquired from the electrode sensor 361 may be provided to the processor 320. For example, the processor 320 may determine whether the electronic device 200 (e.g., wearable electronic device, smart watch, smart watch) is worn based on the biometric signal from the electrode sensor 361.

According to an embodiment, the IR sensor 362 may include at least one of an optical proximity sensor, an optical sensor, and a PPG sensor. For example, the IR sensor 362 may include a light emitting portion configured with a plurality of LEDs that emit light and a light receiving portion configured with a plurality of photodiodes (PDs) that receive light and convert the same to an electrical signal. For example, the processor 220 may acquire a biometric signal of the user by operating the IR sensor 362. The processor 320 may determine whether the electronic device 200 (e.g., wearable electronic device, smart watch, smart band) is worn based on the biometric signal from the IR sensor 362.

According to an embodiment, the temperature sensor 363 may include at least one of a contact-typed temperature sensor and a contact-free temperature sensor. The temperature sensor 363 may measure the user's skin temperature or body temperature by reflecting characteristics of electromagnetic waves irradiated from an object according to its temperature. For example, the temperature sensor 363 (e.g., contact-free temperature sensor) may include a contact-free IR temperature sensor. For example, since the temperature inside the sensor may have influence due to characteristics of the contact-free temperature sensor, the temperature sensor 363 (e.g., contact-free temperature sensor) may include a temperature sensor configured to measure the internal temperature of the temperature sensor 363. The temperature sensor that measures the internal temperature of the electronic device 200 (e.g., wearable electronic device, smart watch, smart band) may include a thermistor. The internal temperature of the electronic device 200 may be measured using the thermistor. The temperature sensor may measure the internal temperature of the electronic device 200 and may generate a device temperature signal. The device temperature signal generated by the temperature sensor may be provided to the processor 320.

For example, the temperature sensor 363 may acquire a biometric signal according to the user's skin temperature or body temperature. The biometric signal may include data of the user's skin temperature or body temperature. For example, the biometric signal acquired from the temperature sensor 363 (e.g., contact-free temperature sensor) may be provided to the processor 320. For example, the processor 320 may determine whether the electronic device 200 (e.g., wearable electronic device, smart watch, smart band) is worn based on the third biometric signal from the temperature sensor 363.

According to an embodiment, the motion sensor 364 may detect a state (or posture, direction) of the electronic device 200 (e.g., wearable electronic device, smart watch, smart band), and an angle, movement, and inertia at which the state (or posture, direction) of the electronic device 200 (e.g., wearable electronic device, smart watch, smart band) is worn on the wrist of the user.

For example, the motion sensor 364 may detect the angle, velocity, acceleration, angular velocity, and/or angular acceleration by the movement of the electronic device 200 (e.g., wearable electronic device, smart watch, smart band). The motion sensor 364 may generate a motion detection signal for the movement of the electronic device 200 (e.g., wearable electronic device, smart watch) and may provide the motion detection signal to the processor 320. For example, the processor 320 may determine the state (or posture, direction) of the electronic device 200 (e.g., wearable electronic device, smart watch, smart band), and the angle, movement, and inertia at which the state (or posture, direction) of the electronic device 200 (e.g., wearable electronic device, smart watch, smart band) is worn on the wrist of the user based on the motion detection signal from the motion sensor 364.

For example, the electronic device 200 (e.g., wearable electronic device, smart watch, smart band) may include a 6-axis sensor (e.g., acceleration sensor and gyro sensor). The 6-axis sensor may sense whether the user is in motion and the magnitude of the motion. A motion sensing value of the 6-axis sensor may be provided to the processor 320. The processor 320 may determine whether there was the motion of the user and the magnitude of the motion based on the

motion sensing value from the 6-axis sensor. For example, the electronic device 200 (e.g., wearable electronic device, smart watch, smart band) may include a global positioning system (GPS) sensor to detect a current location.

According to an embodiment, the humidity sensor 365 may measure the humidity of the user's skin and the external humidity. The humidity sensor 365 may provide a humidity signal humidity signal (e.g., humidity data, humidity information) according to the result to the processor 320.

According to an embodiment, the hinge sensor 366 may measure the movement angle of the first hinge driving module 231 that connects the first housing 211 and the second housing 212. The hinge sensor 366 may provide a first hinge angle signal (e.g., first hinge angle data, first hinge angle information) according to the result of measuring the movement angle of the first hinge driving module 231 to the processor 320. For example, the hinge sensor 366 may be included in a sensor module (e.g., sensor module 176 of FIG. 3a, sensor circuit). For example, the hinge sensor 366 may be embedded in the first hinge driving module 231, and may measure the movement angle of the first hinge driving module 231.

According to an embodiment, the hinge sensor 366 may measure the movement angle of the second hinge driving module 232 that connects the first housing 211 and the third housing 213. The hinge sensor 366 may provide a second hinge angle signal (e.g., second hinge angle data, second hinge angle information) according to the result of measuring the movement angle of the second hinge driving module 232 to the processor 320. For example, the hinge sensor 366 may be included in the sensor module (e.g., sensor module 176 of FIG. 3a, sensor circuit). For example, the hinge sensor 366 may be embedded in the second hinge driving module 232, and may measure the movement angle of the second hinge driving module 232.

According to an embodiment, the magnetic field sensor 367 (e.g., hall sensor) may measure the angle between the first housing 211 and the second housing 212 (e.g., angle formed by folding and unfolding of first housing 211 and second housing 212). The magnetic field sensor 367 (e.g., hall sensor) may provide a first housing angle signal (e.g., first housing angle data, first housing angle information) according to the result of measuring the angle between the first housing 211 and the second housing 212 (e.g., angle formed by folding and unfolding of first housing 211 and second housing 212) to the processor 320.

According to an embodiment, the magnetic field sensor 367 (e.g., hall sensor) may measure the angle between the first housing 211 and the third housing 213 (e.g., angle formed by folding and unfolding of first housing 211 and second housing 213). The magnetic field sensor 367 (e.g., hall sensor) may provide a second housing angle signal (e.g., second housing angle data, second housing angle information) according to the result of measuring the angle between the first housing 211 and the third housing 213 (e.g., angle formed by folding and unfolding of first housing 211 and second housing 213) to the processor 320.

According to an embodiment, the water depth sensor 368 may measure the depth of water when the electronic device 200 (e.g., wearable electronic device, smart watch, smart band) is present in water. The water depth sensor 368 may provide a water depth signal (e.g., water depth data, water depth information) according to the result of measuring the depth of water to the processor 320.

According to an embodiment, the altitude sensor may measure the height of a location at which the electronic device 200 (e.g., wearable electronic device, smart watch, smart band) is present. The altitude sensor may provide an altitude signal (e.g., altitude data, altitude information) according to the result of measuring the height of a location at which the electronic device 200 (e.g., wearable electronic device, smart watch) is present to the processor 320.

According to an embodiment, the barometric sensor may measure the barometric pressure of a location at which the electronic device 200 (e.g., wearable electronic device, smart watch, smart band) is present. The barometric sensor may provide a barometric pressure signal (e.g., barometric pressure data, barometric pressure information) according to the result of measuring the barometric pressure of a location at which the electronic device 200 (e.g., wearable electronic device, smart watch) is present to the processor 320.

According to an embodiment, the curvature adjustment module 370 may include a first curvature adjustment module 371 and a second curvature adjustment module 372. For example, the second housing structure (e.g., second housing 212) may include the first curvature adjustment module 371. For example, the third housing structure (e.g., third housing 212) may include the second curvature adjustment module 372. For example, the first curvature adjustment module 371 may adjust the curvature of the second display (e.g., second display 222 of FIG. 2a, first sub-display, first sub-display area, outer display). For example, the second curvature adjustment module 372 may adjust the curvature of the third display (e.g., third display 223 of FIG. 2a, second sub-display, second sub-display area, inner display).

According to an embodiment, the electronic device 200 (e.g., wearable electronic device, smart watch, smart band) may adjust the bending curvature of at least a portion of the second display 222 and at least a portion of the third display portion 223 using the first curvature adjustment module 371 and second curvature adjustment module 372 based on the change in the activity state of the user.

According to an embodiment, the first curvature adjustment module 371 may include an actuator (e.g., electroactive polymer (EAP) strip) configured to change the curvature of the second display (e.g., second display 222 of FIG. 2a, first sub-display, first sub-display area, outer display).

According to an embodiment, the second curvature adjustment module 372 may include an actuator (e.g., electroactive polymer (EAP) strip) configured to change the curvature of the third display (e.g., third display 223 of FIG. 2a, second sub-display, second sub-display area, inner display). For example, the actuator (e.g., electroactive polymer (EAP) strip) may be attached on the back surface (e.g., rear surface) of the second display 222 and the third display 223. The size and/or shape of the actuator (e.g., electroactive polymer (EAP) strip) may change when stimulated by the electric field. The curvature of the back surface (e.g., rear surface) of the second display 222 and the third display 223 may be changed through the actuator (e.g., electroactive polymer (EAP) strip), and various curve profiles may be provided.

FIG. 4 is a block diagram of the display module illustrated in FIG. 3a.

With reference to FIG. 4, the display module 380 (e.g., display module 160 of FIG. 1) of the electronic device 200 (e.g., wearable electronic device, smart watch, smart band) according to an embodiment of the disclosure may include the display 220, a display driver IC 430 (e.g., display driving unit) to drive the display 220, a touch circuit 450 to detect touch on the display 220, a digitizer 460 to detect the input of an electronic pen (e.g., stylus pen), and a digitizer driving unit 470 to drive the digitizer 460. Hereinafter, the display driver IC 430 may be referred to as 'DDIC 430.'

According to an embodiment, the display 220 may include a first display (e.g., first display 221 of FIG. 2a, main display, center display, main display area), a second display (e.g., second display 222 of FIG. 2a, first sub-display, first sub-display area, outer display), and a third display (e.g., third display 223 of FIG. 2a, second sub-display, second sub-display area, inner display).

According to an embodiment, the DDIC 430 may separate and drive each of the first display 221 (e.g., main display, center display, main display area), the second display 222 (e.g., first sub-display, first sub-display area), and the third display 223 (e.g., second sub-display, second sub-display area). For example, the DDIC 430 may control each of the first display 221 (e.g., main display, center display, main display area), the second display 222 (e.g., first sub-display, first sub-display area), and the third display 223 (e.g., second sub-display, second sub-display area) to display content as a separate display.

According to an embodiment, the DDIC 430 may drive the first display 221 (e.g., main display, center display, main display area), the second display 222 (e.g., first sub-display, first sub-display area), and the third display 223 (e.g., second sub-display, second sub-display area) in conjunction with each other. For example, the DDIC 430 may control the first display 221 (e.g., main display, center display, main display area), the second display 222 (e.g., first sub-display, first sub-display area), and the third display 223 (e.g., second sub-display, second sub-display area) to display content as a single integrated display.

According to an embodiment, the DDIC 430 may operate based on control of a processor (e.g., processor 320 of FIG. 3a). For example, the DDIC 430 may include an interface module 431, a memory 433 (e.g., buffer memory), an image processing module 435, or a mapping module 437.

According to an embodiment, the DDIC 430 may receive video data, or video information that contains a video control signal corresponding to an instruction for controlling the video data from another component of the electronic device (e.g., electronic device 101 of FIG. 1, electronic device 200 of FIG. 3) through the interface module 431.

According to an embodiment, the video information may be received from the processor 320 (e.g., main processor 121 of FIG. 1) (e.g., application processor) or an auxiliary processor (e.g., auxiliary processor 123 of FIG. 1) (e.g., graphics processing unit) that operates independently of functions of the main processor 121.

According to an embodiment, the DDIC 430 may communicate with the touch circuit 450 and/or sensor module 176 using the interface module 431. Also, the DDIC 430 may store at least a portion of the received video information in the memory 433. For example, the DDIC 430 may store at least a portion of the received video information in the memory 433 on a frame basis.

According to an embodiment, the image processing module 435 may perform preprocessing or postprocessing (e.g., resolution, brightness, or resizing) on at least a portion of the video data based on at least a characteristic of the video data or a characteristic of the display 220.

According to an embodiment, the mapping module 437 may generate a voltage value or a current value corresponding to the video data that is preprocessed or postprocessed through the image processing module 435. According to an embodiment, generation of the voltage value or the current value may be performed at least in portion based on, for example, the property of pixels of the display 220 (e.g., arrangement of pixels (RGB stripe or pentile structure), or size of each of subpixels).

According to an embodiment, at least some pixels of the display 220 may be driven based at least in portion on, for example, the voltage value or the current value, so visual information (e.g., text, image, or icon) corresponding to the video data may be displayed through the display 220.

According to an embodiment, the touch circuit 450 may include a touch sensor 451 (e.g., touch screen) and a touch sensor IC 453 (touch fingerprint sensor integrated circuit).

According to an embodiment, the touch circuit 450 may detect touch input or hovering input for a specific location of the display 220. The touch sensor IC 453 may control the touch sensor 451 (e.g., touch screen) to detect the touch input or the hovering input. For example, the touch sensor IC 453 may detect the touch input or the hovering input by measuring

the change in a signal (e.g., voltage, light quantity, resistance, or charge amount) for the specific location of the display 220. The touch sensor IC 453 may provide information on the detected touch input or hovering input (e.g., location, area, pressure, or time) to the processor 320 (e.g., transmission to processor 320, input to processor 320).

According to an embodiment, the touch sensor 451 (e.g., touch screen) may be applied in an add-on manner in which the touch sensor 451 is separately manufactured and separately arranged in an upper portion (e.g., top portion) of the display 220.

According to an embodiment, the touch sensor 451 (e.g., touch screen) may be applied in an on-cell manner in which the touch sensor 451 is arranged in an upper portion of the display 220.

According to an embodiment, the touch sensor 451 (e.g., touch screen) may be applied in an in-cell manner in which the touch sensor 451 is arranged along with pixels of the display 220.

According to an embodiment, at least a portion (e.g., touch sensor IC 453) of the touch circuit 450 may be included as a portion of the DDIC 430 or the display 220.

According to an embodiment, at least a portion (e.g., touch sensor IC 453) of the touch circuit 450 may be included as a portion (e.g., auxiliary processor 123) of another component arranged outside the display module 380.

According to an embodiment, the display module 380 may further include a at least one sensor of the sensor module 176, or a control circuit of the sensor module 176. In this case, the at least one sensor or the control circuit thereto may be embedded in a portion of the display module 380 (e.g., display 220 or DDIC 430) or a portion of the touch circuit 450.

For example, when the sensor module 176 embedded in the display module 380 includes a pressure sensor, the pressure sensor may acquire (e.g., receive) pressure information associated with the touch input through a portion or the entire area of the display 220.

According to an embodiment, the touch sensor 451 or the sensor module 176 may be arranged between pixels of a pixel layer of the display 220, or on or below the pixel layer.

According to an embodiment, the display module 380 may include the digitizer 460 to detect an input (e.g., touch input or hovering input) of the electronic pen (e.g., stylus pen). For example, the digitizer driving unit 470 that drives the digitizer 460 may be included as a component of the display module 160. For example, the digitizer driving unit 470 that drives the digitizer 460 may be included as a component separate from the display module 160. For example, the digitizer 460 may convert analog coordinates (e.g., location) of the electronic pen (e.g., stylus pen) to digital coordinate data. The digitizer 460 may deliver the digital coordinate data to a processor (e.g., processor 120 of FIG. 1 and/or DDIC 430).

According to an embodiment, the processor 320 (e.g., processor 120 of FIG. 1) may acquire (e.g., receive) the digital coordinate data that is input from the digitizer 460. The processor 320 may detect an input (e.g., touch input or hovering input) through the electronic pen (e.g., stylus pen) based on the digital coordinate data. For example, the digitizer 460 may include a plurality of x-axis channels and a plurality of y-axis channels. The processor 320 may sense a location of the electronic pen (e.g., stylus pen) using sensing signals (e.g., electro magnetic resonance (EMR) signals) received from the x-axis channels and the y-axis channels arranged in the digitizer 460. For example, the plurality of x-axis channels and the plurality of y-axis channels may be sequentially arranged in the digitizer 460, and the processor 320 may sense a location of the electronic pen (e.g., stylus pen) using sensing signals that are received from a plurality of consecutive channels (e.g., three adjacent channels).

According to an embodiment, the digitizer 460 may not be viewed from the outside due to the display 220, electronic parts, and mechanisms.

For example, the digitizer 460 may be arranged in the integrated form with a flat panel display or a flexible display. For example, the digitizer 460 may be arranged adjacent to the flat panel display or the flexible display. For example, when the digitizer 460 is applied to the display 220, the digitizer 460 may include a single electro magnetic resonance (EMR) sheet (or EMR film). The plurality of x-axis channels and the plurality of y-axis channels may be arranged on a single EMR sheet to detect the location of the electronic pen.

For example, the digitizer 460 may be arranged integrally with the flexible display (e.g., rollable display), or may be arranged adjacent to the flexible display. For example, the digitizer 460 may be arranged in a lower portion (e.g., bottom) of the display 220.

According to an embodiment, the electronic device 200 (e.g., wearable electronic device, smart watch) may further include an ultrasonic sensor (not shown) configured to identity touch of a user using ultrasonic waves and an ultrasonic sensor driving unit (not shown) configured to drive the ultrasonic sensor.

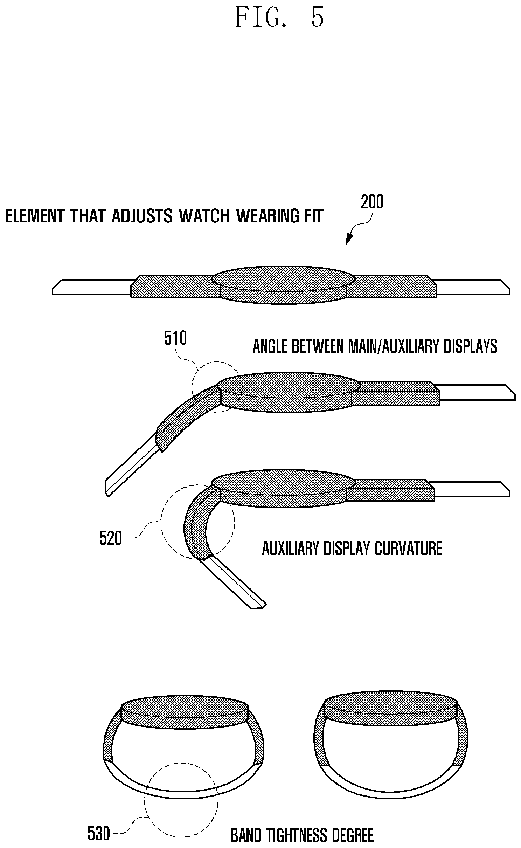

FIG. 5 illustrates an example of adjusting the tightness degree (e.g., loosening or tightening) when an electronic device (e.g., wearable electronic device, smart watch, smart band) is worn on the wrist of a user according to an embodiment of the disclosure.

With reference to FIG. 5, wearing of the electronic device (e.g., wearable electronic device, smart watch, smart band) may be adjusted to be loosened or tightened (e.g., adjust fit of wearable electronic device) according to the user's activity state and external environmental conditions.

According to an embodiment, the electronic device 200 (e.g., wearable electronic device, smart watch) may drive the first hinge driving module (e.g., first hinge driving module 231 of FIG. 2a and FIG. 2b) to adjust the angle formed by the

first housing (e.g., first housing 211 of FIG. 2a and FIG. 2b, main housing) and the second housing (e.g., second housing 212 of FIG. 2a and FIG. 2b, first sub-housing). The electronic device 200 (e.g., wearable electronic device, smart watch) may drive the second hinge driving module 232 to adjust the angle formed by the first housing 211 (e.g., main housing) and the third housing (e.g., third housing 213 of FIG. 2a and FIG. 2b, second sub-housing). As illustrated in "510," when the electronic device 200 is worn on the wrist of the user, the hinge (e.g., hinge 230 of FIG. 2a and FIG. 2b) may be driven to adjust the angle of the housing (e.g., housing 210 of FIG. 2a and FIG. 2b), thereby controlling the electronic device 200 to be worn loosely or to be worn tightly.

According to an embodiment, the electronic device 200 (e.g., wearable electronic device, smart watch) may adjust the bending curvature of the second display 222 (e.g., first sub-display, first sub-display area) such that the second display 222 (e.g., first sub-display, first sub-display area) has a curved shape (e.g., shape curved to fit shape of wrist). The electronic device 200 (e.g., wearable electronic device, smart watch) may adjust the bending curvature of the third display 223 (e.g., second sub-display, second sub-display area) such that the third display 223 (e.g., second sub-display, second sub-display area) has a flat shape. As illustrated in "520," by adjusting the bending curvature of at least a portion of the display 220, the electronic device 200 may be adjusted to be worn loosely or to be worn tightly when the electronic device 200 is worn on the wrist of the user.

According to an embodiment, the electronic device 200 (e.g., wearable electronic device, smart watch) may adjust the angle of the housing (e.g., housing 210 of FIG. 2a and FIG. 2b) and the bending curvature of at least a portion of the display 220, thereby controlling the electronic device 200 to be worn loosely or to be worn tightly (530).

According to an embodiment, the electronic device 200 (e.g., wearable electronic device, smart watch) may detect a state in which it is worn on the wrist of the user using the sensor module 176. The electronic device 200 (e.g., wearable electronic device, smart watch) may identify the activity state of the user using the sensor module 176 based on detecting the state in which it is worn on the wrist of the user. The electronic device 200 (e.g., wearable electronic device, smart watch) may adjust at least one of the angle between structures of the housing 210 and the bending curvature of the display (e.g., display 220 of FIG. 2a and FIG. 2b) based on the change in the activity state of the user.

For example, changing the angle between the structures of the housing 210 may include operating the first hinge driving module (e.g., first hinge driving module 231 of FIG. 2a and FIG. 2b) to change the angle between the first housing (e.g., first housing 211 of FIG. 2a and FIG. 2b) and the second housing (e.g., second housing 212 of FIG. 2a and FIG. 2b).

For example, changing the angle between the structures of the housing 210 may include operating the second hinge driving module (e.g., second hinge driving module 232 of FIG. 2a and FIG. 2b) to change the angle between the first housing (e.g., first housing 211 of FIG. 2a and FIG. 2b) and the third housing (e.g., third housing 213 of FIG. 2a and FIG. 2b).

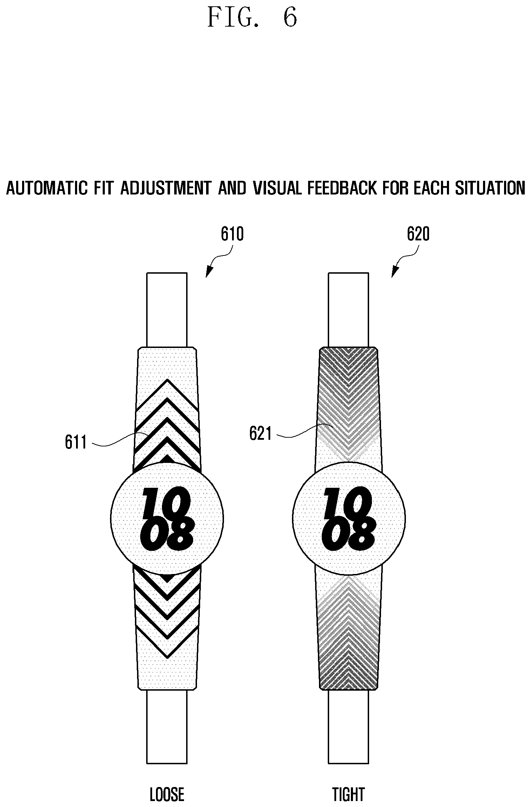

FIG. 6 illustrates an example of displaying (e.g., displaying visually) through a user interface that the tightness degree (e.g., loosening or tightening) of an electronic device (e.g., wearable electronic device, smart watch, smart band) is adjusted for each situation.

With reference to FIG. 6, according to an embodiment, adjusting the fit of the electronic device 200 (e.g., wearable electronic device, smart watch) to be loosened may be displayed on the display (e.g., display 220 of FIG. 2a and FIG. 2b).

For example, a user interface 611 (or content) indicating that the fit is adjusted to be loosened may be displayed on the display 220, such that the user may intuitively recognize that the fit is automatically adjusted to be loosened depending on the situation.

According to an embodiment, the electronic device 200 (e.g., wearable electronic device, smart watch) may display that the fit is adjusted to be tightened (e.g., tight) on the display 220 (620).

For example, a user interface 621 (or content) indicating that the fit is adjusted to be tightened (e.g., tight) on the display 220, such that the user may intuitively recognize that the fit is adjusted to be tightened (e.g., tight) depending on the situation.

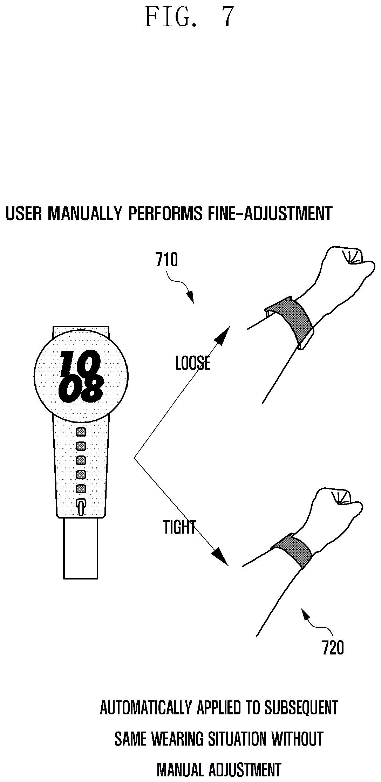

FIG. 7 illustrates an example of providing a function that allows a user to manually adjust the tightness degree (e.g., loosening or tightening) of an electronic device (e.g., wearable electronic device, smart watch).

With reference to FIG. 7, the electronic device 200 (e.g., wearable electronic device, smart watch) may provide a function capable of fine-adjusting the tightness degree (e.g., loosening or tightening) of the electronic device (e.g., wearable electronic device, smart watch).

According to an embodiment, when the user desires fine-adjustment of fit while the fit of the electronic device 200 (e.g., wearable electronic device, smart watch) is adjusted to a preset value, the tightness degree (e.g., loosening or tightening) of the electronic device (e.g., wearable electronic device, smart watch) may be finely adjusted.

For example, in a state in which fit of the electronic device 200 (e.g., wearable electronic device, smart watch) is adjusted to a preset value, the fit may be finely adjusted to be loosened by the user's selection on fine-adjustment (710).

For example, in a state in which the fit of the electronic device 200 (e.g., wearable electronic device, smart watch) is adjusted to a preset value, the fit may be finely adjusted to be tightened (e.g., tight) by the user's selection on fine-adjustment (720).

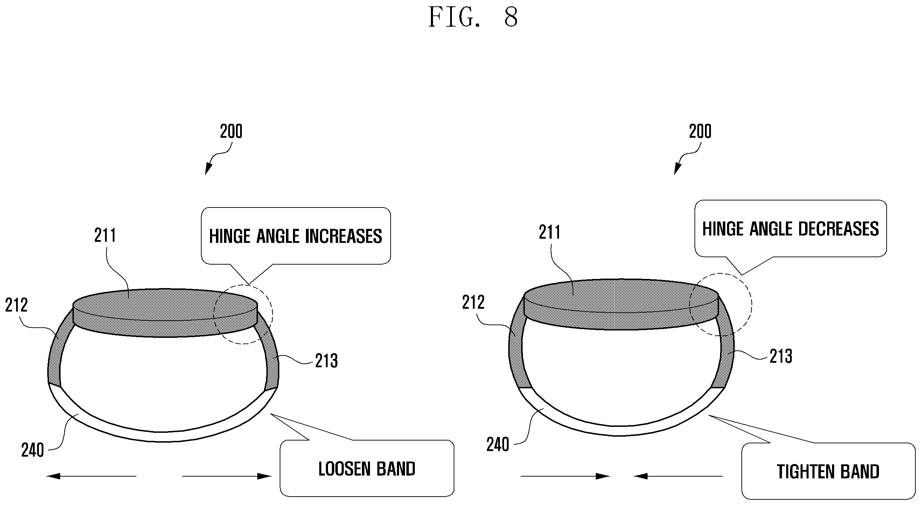

FIG. 8 illustrates an example of adjusting the tightness degree (e.g., loosening or tightening) of an electronic

device (e.g., wearable electronic device, smart watch) due to the change in the angle of a hinge.

With reference to FIG. 8, according to an embodiment, the electronic device 200 (e.g., wearable electronic device, smart watch) may adjust the angle of the housing (e.g., housing 210 of FIG. 2a and FIG. 2b), thereby controlling the electronic device 200 to be worn loosely or to be worn tightly (e.g., tight).

For example, when the fit of the electronic device 200 is adjusted to be loosened, the length (e.g., width) of the band (e.g., fastening member 240) may be substantially increased. For example, when the fit of the electronic device 200 is adjusted to be tightened (e.g., tight), the length (e.g., width) of the band (e.g., fastening member 240) may be substantially decreased.

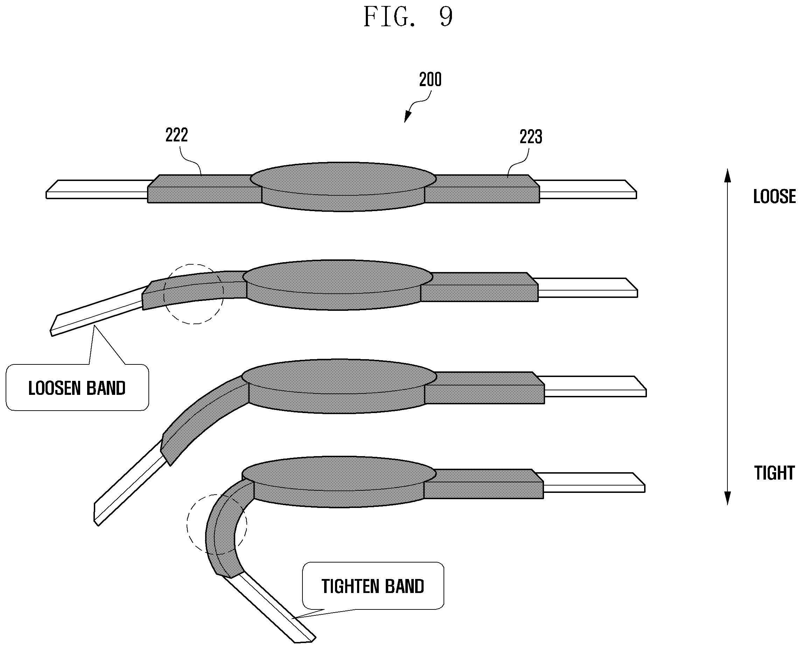

FIG. 9 illustrates an example of adjusting the tightness degree (e.g., loosening or tightening) of an electronic device (e.g., wearable electronic device, smart watch) due to the change in the bending curvature of a sub-display.

With reference to FIG. 9, according to an embodiment, the electronic device 200 (e.g., wearable electronic device, smart watch) may adjust the bending curvature of the second display 222 (e.g., first sub-display, first sub-display area) and the third display 223 (e.g., second sub-display, second sub-display area), thereby controlling the electronic device 200 to be worn loosely or to be worn tightly (e.g., tight).

For example, when the fit of the electronic device 200 is adjusted to be loosened, the length (e.g., width) of the band (e.g., fastening member 240) may be substantially increased. For example, when the fit of the electronic device 200 is adjusted to be tightened (e.g., tight), the length (e.g., width) of the band (e.g., fastening member 240) may be substantially decreased.

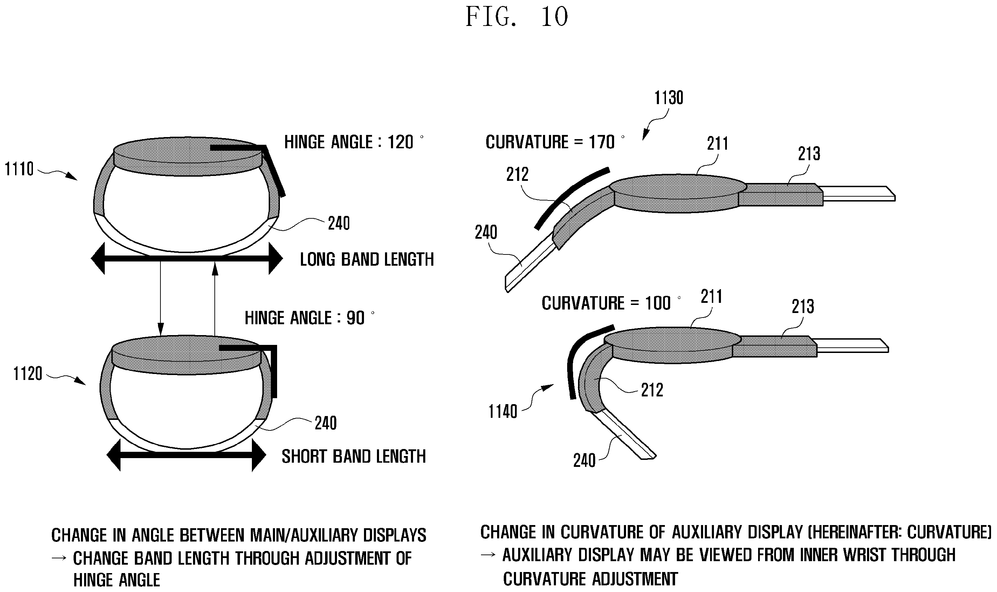

FIG. 10 illustrates an example of adjusting the tightness degree (e.g., loosening or tightening) of an electronic device (e.g., wearable electronic device, smart watch) due to the change in the angle of a hinge and the change in the bending curvature in a sub-display.

With reference to FIG. 10, according to an embodiment, the electronic device 200 (e.g., wearable electronic device, smart watch) may adjust the angle of the housing (e.g., housing 210 of FIG. 2a and FIG. 2b), thereby controlling the electronic device 200 to be worn loosely (1110), or to be worn tightly (1220). Along with adjusting the angle of the housing (e.g., housing 210 of FIG. 2a and FIG. 2b), the electronic device 200 may adjust the bending curvature of the second display 222 (e.g., first sub-display, first sub-display area) and the third display 223 (e.g., second sub-display, second sub-display area), thereby controlling the electronic device 200 to be worn loosely (1130), or to be worn tightly (1140).

For example, when the fit of the electronic device 200 is adjusted to be loosened, the length (e.g., width) of the band (e.g., fastening member 240) may be substantially increased. For example, when the fit of the electronic device 200 is adjusted to be tightened (e.g., tight), the length (e.g., width) of the band (e.g., fastening member 240) may be substantially decreased.

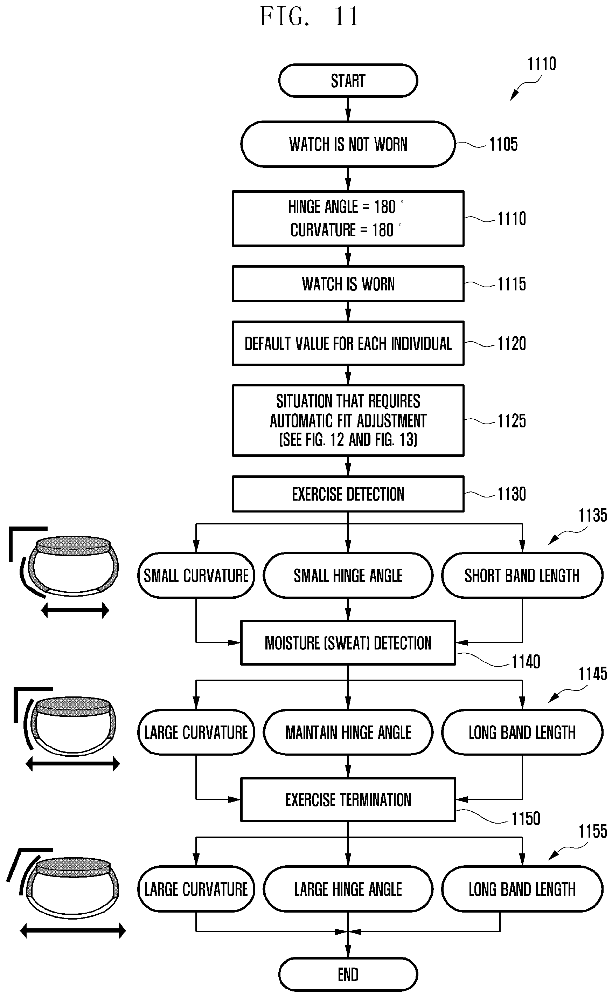

FIG. 11 is a flowchart illustrating an operating method of an electronic device (e.g., wearable electronic device, smart watch, smart band) according to an embodiment of the disclosure.

With reference to FIG. 11, according to an embodiment, the electronic device (electronic device 200 of FIG. 2a and FIG. 3a) may operate a sensor module (e.g., sensor module 176 of FIG. 3a, sensor circuit) to determine whether the electronic device 200 (e.g., wearable electronic device, smart watch) is worn on a user's body (e.g., wrist).

According to an embodiment, a processor (e.g., processor 320 of FIG. 3a) according to an embodiment of the disclosure may operate the sensor module (e.g., sensor module 176 of FIG. 3a, sensor circuit) to determine whether the electronic device 200 (e.g., wearable electronic device, smart watch) is worn on the user's body (e.g., wrist).

According to an embodiment, when the electronic device 200 (e.g., wearable electronic device, smart watch) is not worn on the user's body (e.g., wrist) in operation 1105, the electronic device 200 may perform operation 1110.

According to an embodiment, when the electronic device 200 (e.g., wearable electronic device, smart watch) is not worn on the user's body (e.g., wrist) in operation 1105, the processor 320 may perform operation 1110.

In operation 1110, according to an embodiment, the electronic device 200 may adjust the angle of a hinge (e.g., hinge 230 of FIG. 2a) to the maximum (e.g., 180 degrees).

According to an embodiment, the electronic device 200 may adjust the curvature between a first display (e.g., first display 221 of FIG. 2a) and a second display (e.g., second display 222 of FIG. 2a) to the maximum (e.g., 180 degrees). The electronic device 200 may adjust the curvature between the first display 221 and a third display (e.g., third display 223 of FIG. 2a) to the maximum (e.g., 180 degrees).

In operation 1115, according to an embodiment, the electronic device 200 may operate the sensor module 176 (e.g., sensor circuit) to detect that the electronic device 200 (e.g., wearable electronic device, smart watch) is worn on the user's body (e.g., wrist).

According to an embodiment, the processor 320 may operate the sensor module 176 (e.g., sensor circuit) to detect that the electronic device 200 (e.g., wearable electronic device, smart watch) is worn on the user's body (e.g., wrist).

In operation 1120, according to an embodiment, the electronic device 200 may adjust the fit by optionally applying one of a plurality of fit values stored in a memory (e.g., memory 330 of FIG. 3a).

According to an embodiment, the processor 320 may adjust the fit by optionally applying one of the plurality of fit values stored in the memory (e.g., memory 330 of FIG. 3a).

In operation 1125, according to an embodiment, the electronic device 200 may determine whether the fit needs to be adjusted.

According to an embodiment, the processor 320 may determine whether the fit needs to be adjusted.

In operation 1130, according to an embodiment, in the case of detecting an exercise state in which the fit needs to be adjusted, the electronic device 200 may apply a fit value suitable for an exercise mode.

According to an embodiment, in the case of detecting an exercise state in which the fit needs to be adjusted, the processor 320 may apply a fit value suitable for an exercise mode.

In operation 1135, the electronic device 200 may adjust the fit of the electronic device 200 to be tight to suit the exercise mode.

According to an embodiment, the processor 320 may adjust the fit of the electronic device 200 to be tight to suit the exercise mode.

In operation 1140, according to an embodiment, the electronic device 200 may measure moisture (e.g., sweat) by the user's exercise. For example, the electronic device 200 may measure moisture (e.g., sweat) by the user's exercise using a humidity sensor (e.g., humidity sensor 365 of FIG. 3a), and may acquire a humidity value. When the humidity value exceeds a reference value, the electronic device 200 may determine that the moisture has occurred on the user's body.

According to an embodiment, the processor 320 may measure moisture (e.g., sweat) by the user's exercise. For example, the processor 320 may measure moisture (e.g., sweat) by the user's exercise using the humidity sensor (e.g., humidity sensor of 365 FIG. 3a), and may acquire a humidity value. When the humidity value exceeds a reference value, the processor 320 may determine that the moisture has occurred on the user's body.

In operation 1145, according to an embodiment, when the measured moisture (e.g., sweat) exceeds the reference value as a result of measuring the moisture (e.g., sweat), the electronic device 200 may adjust the fit of the electronic device 200 to be loosened.

According to an embodiment, when the measured moisture (e.g., sweat) exceeds the reference value as a result of measuring the moisture (e.g., sweat), the processor 320 may adjust the fit of the electronic device 200 to be loosened.

In operation 1150, according to an embodiment, the electronic device 200 may operate the sensor module 176 (e.g., sensor circuit) to determine whether the user's exercise has terminated.

According to an embodiment, the processor 320 may operate the sensor module 176 (e.g., sensor circuit) to determine whether the user's exercise has terminated.

In operation 1155, according to an embodiment, the electronic device 200 may terminate the exercise mode according to termination of the user's exercise, and may adjust the fit of the electronic device 200 to be loose such that the moisture (e.g., sweat) may be easily evaporated (or removed).

According to an embodiment, the processor 320 may terminate the exercise mode according to termination of the user's exercise, and may adjust the fit of the electronic device 200 to be loose such that the moisture (e.g., sweat) may be easily evaporated (or removed).

According to an embodiment, as shown in Table 1 below, the electronic device 200 may adjust the angle of the hinge (e.g., hinge 230 of FIG. 2a) in three stages and may adjust the bending curvature of the display (e.g., display 220 of FIG. 2a) in three stages, thereby adjusting the fit of the electronic device 200 from a loose state to a tight state or from the tight state to the loose state in a total of nine stages

[Table 1]

Tightness stages

| | | Curvature of auxiliary display | | |
|---|---|---|---|---|
| | | Small | Medium | Large |
| Hinge angle | Small | Very tight | Tight | Medium |
| | Medium | Tight | Medium | loose |
| | Large | Medium | loose | Very loose |

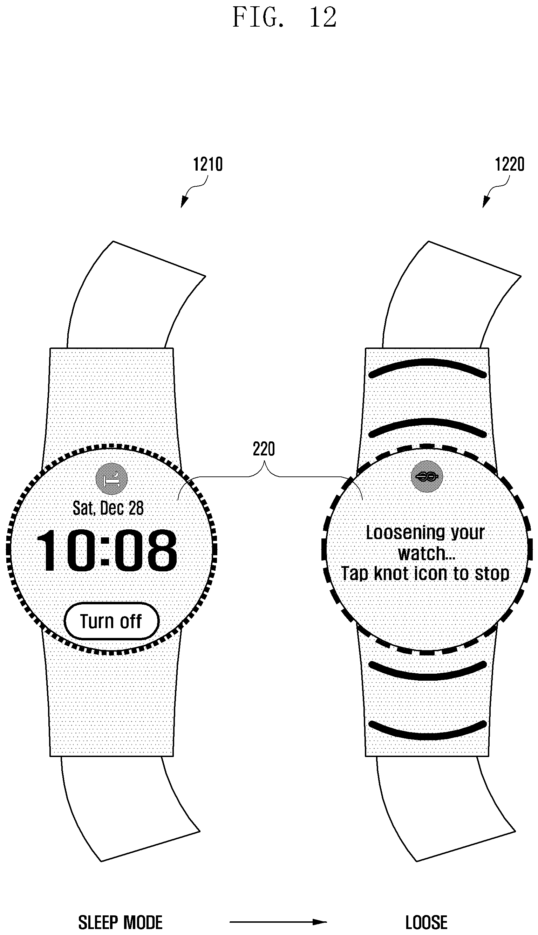

FIG. 12 illustrates an example of adjusting the tightness degree (e.g., loosening or tightening) of an electronic device (e.g., wearable electronic device, smart watch) in a sleep mode.

With reference to FIG. 12, according to an embodiment, the electronic device 200 may determine whether the user is in a sleep state by operating the sensor module 176 (e.g., sensor circuit) to measure movement of the user. When the user is in the sleep state, the electronic device 200 may adjust the fit from a tight state 1210 to a loose state 1220 to suit a sleep mode. For example, the electronic device 200 may display a user interface (e.g., content) for releasing the sleep mode on the display 220 (e.g., display 220 of FIG. 2a) such that the user may release a sleep mode state and adjust the fit to another mode state.

According to an embodiment, the processor 320 may determine whether the user is in the sleep state by operating the sensor module 176 (e.g., sensor circuit) to measure movement of the user. When the user is in the sleep state, the processor 320 may adjust the fit from the tight state 1210 to the loose state 1220 to suit the sleep mode. For example, the processor 320 may display a user interface (e.g., content) for releasing the sleep mode on the display 220 (e.g., display 220 of FIG. 2a) such that the user may release a sleep mode state and adjust the fit to another mode state.

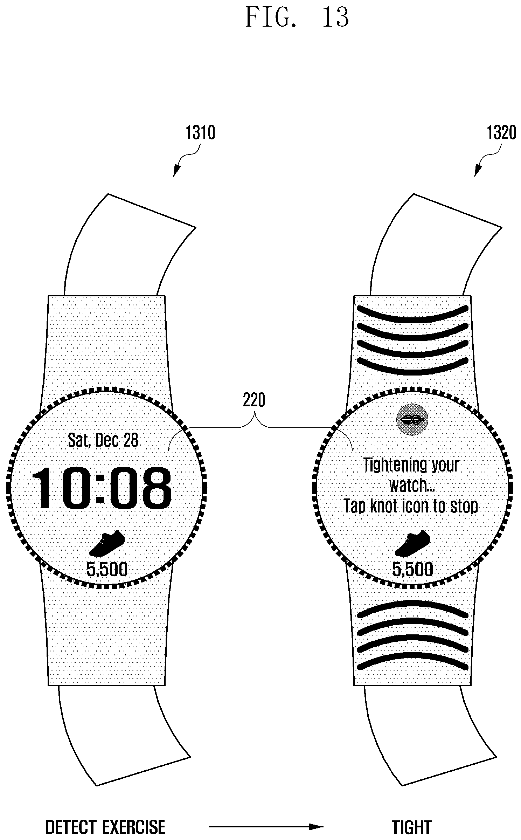

FIG. 13 illustrates an example of adjusting the tightness degree (e.g., loosening or tightening) of an electronic device (e.g., wearable electronic device, smart watch) in an exercise mode.

With reference to FIG. 13, according to an embodiment, the electronic device 200 may determine whether the user is in an exercise state by operating the sensor module 176 (e.g., sensor circuit) to measure the movement of the user. When the user is in the exercise state, the electronic device 200 may adjust the fit from a loos state 1310 to a tight state 1320 to suit an exercise mode. For example, the electronic device 200 may display a user interface (e.g., content) for releasing the exercise mode on the display 220 (e.g., display 220 of FIG. 2a) such that the user may release an exercise mode state and adjust the fit to another mode state.

According to an embodiment, the processor 320 may determine whether the user is in the exercise state by operating the sensor module 176 (e.g., sensor circuit) to measure the movement of the user. When the user is in the exercise state, the processor 320 may adjust the fit from the loos state 1310 to the tight state 1320 to suit the exercise mode. For example, the processor 320 may display a user interface (e.g., content) for releasing the exercise mode on the display 220 (e.g., display 220 of FIG. 2a) such that the user may release an exercise mode state and adjust the fit to another mode state.

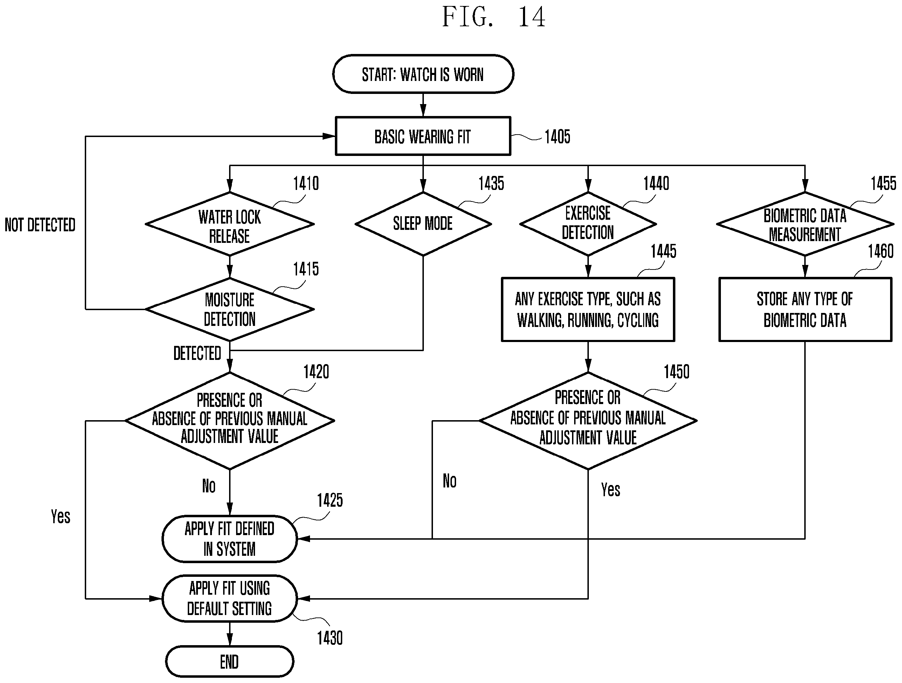

FIG. 14 is a flowchart illustrating an operating method of an electronic device (e.g., wearable electronic device, smart watch, smart band) according to an embodiment of the disclosure.

With reference to FIG. 14, according to an embodiment, the electronic device (e.g., electronic device 200 of FIG. 2a and FIG. 3a) may operate a sensor module (e.g., sensor module 176 of FIG. 3a, sensor circuit) to determine whether the electronic device 200 is worn on the user's body (e.g., wrist).

According to an embodiment, a processor (e.g., processor 320 of FIG. 3a) may operate the sensor module 176 (e.g., sensor circuit) to determine whether the electronic device 200 is worn on the user's body (e.g., wrist).

In operation 1405, according to an embodiment, when the electronic device 200 is worn on the user's body (e.g.,

wrist), the electronic device 200 may apply the basic wearing fit.

According to an embodiment, when the electronic device 200 is worn on the user's body (e.g., wrist), the processor 320 may apply the basic wearing fit.

According to an embodiment, the electronic device 200 may operate the sensor module (e.g., sensor module 176 of FIG. 3a, sensor circuit) to determine the user's activity state (e.g., swimming, sleeping, exercising).

According to an embodiment, the processor 320 may operate the sensor module (e.g., sensor module 176 of FIG. 3a, sensor circuit) to determine the user's activity state (e.g., swimming, sleeping, exercising).

In operation 1410, according to an embodiment, the electronic device 200 may release water lock for moisture detection.

According to an embodiment, the processor 320 may release water lock for moisture detection.

In operation 1415, according to an embodiment, the electronic device 200 may detect the moisture.

In operation 1415, according to an embodiment, the processor 320 may detect the moisture.

When the moisture is detected in operation 1415, the electronic device 200 may perform operation 1420. When the moisture is not detected in operation 1415, the electronic device 200 may return to operation 1405 and may perform a next operation.

When the moisture is detected in operation 1415, the processor 320 may perform operation 1420. When the moisture is not detected in operation 1415, the processor 320 may return to operation 1405 and may perform a next operation.

In operation 1420, according to an embodiment, the electronic device 200 may determine whether there is a fine adjustment value of the fit that was manually adjusted by the user in the past.

According to an embodiment, the processor 320 may determine whether there is a fine adjustment value of the fit that was manually adjusted by the user in the past.

If there is no fine adjustment value of the fit that was manually adjusted by the user in the past as the determination result of operation 1420, the electronic device 200 may perform operation 1425. If there is the fine adjustment value of the fit that was manually adjusted by the user in the past, the electronic device 200 may perform operation 1430.

If there is no fine adjustment value of the fit that was manually adjusted by the user in the past as the determination result of operation 1420, the processor 320 may perform operation 1425. If there is the fine adjustment value of the fit that was manually adjusted by the user in the past, the processor 320 may perform operation 1430.

In operation 1425, according to an embodiment, the electronic device 200 may adjust the fit of the electronic device 200 by applying a fit value defined in the system (e.g., applying preset fit value).

According to an embodiment, the processor 320 may adjust the fit of the electronic device 200 by applying a fit value defined in the system (e.g., applying preset fit value).

In operation 1430, according to an embodiment, the electronic device 200 may adjust the fit of the electronic device 200 by applying the fine adjustment value of the fit that was manually adjusted by the user in the past.

According to an embodiment, the processor 320 may adjust the fit of the electronic device 200 by applying the fine adjustment value of the fit that was manually adjusted by the user in the past.

In operation 1435, according to an embodiment, the electronic device 200 may operate the sensor module 176 (e.g., sensor circuit) to identity a sleep state of the user. The electronic device 200 may adjust the fit of the electronic device 200 by applying a sleep mode. Then, the electronic device 200 may perform operation 1420 to operation 1430.

According to an embodiment, the processor 320 may operate the sensor module 176 (e.g., sensor circuit) to identity the sleep state of the user. The processor 320 may adjust the fit of the electronic device 200 by applying the sleep mode. Then, the processor 320 may perform operation 1420 to operation 1430.

In operation 1440, according to an embodiment, the electronic device 200 may operate the sensor module 176 (e.g., sensor circuit) to identify an exercise state of the user.

According to an embodiment, the processor 320 may operate the sensor module 176 (e.g., sensor circuit) to identify the exercise state of the user.

In operation 1445, according to an embodiment, the electronic device 200 may adjust the fit of the electronic device 200 by applying an exercise mode (e.g., walking, running, cycling).

According to an embodiment, the processor 320 may adjust the fit of the electronic device 200 by applying the exercise mode (e.g., walking, running, cycling).

In operation 1450, according to an embodiment, the electronic device 200 may determine whether there is a fine adjustment value of the fit that was manually adjusted by the user in the past.

According to an embodiment, the processor 320 may determine whether there is a fine adjustment value of the fit that was manually adjusted by the user in the past.

If there is no fine adjustment value of the fit that was manually adjusted by the user in the exercise mode in the past as the determination result of operation 1450, the electronic device 200 may perform operation 1425. If there is the fine adjustment value of the fit that was manually adjusted by the user in the exercise mode in the past, the electronic device 200 may perform operation 1430.

If there is no fine adjustment value of the fit that was manually adjusted by the user in the exercise mode in the past as the determination result of operation 1450, the processor 320 may perform operation 1425. If there is the fine adjustment value of the fit that was manually adjusted by the user in the exercise mode in the past, the processor 320 may perform operation 1430.

In operation 1425, according to an embodiment, the electronic device 200 may adjust the fit of the electronic device 200 by applying the fit value defined in the system (e.g., applying preset fit value).

According to an embodiment, the processor 320 may adjust the fit of the electronic device 200 by applying the fit value defined in the system (e.g., applying preset fit value).

In operation 1430, according to an embodiment, the electronic device 200 may adjust the fit of the electronic device 200 by applying a fine adjustment value of the fit that was manually adjusted by the user in the exercise mode in the past.

According to an embodiment, the processor 320 may adjust the fit of the electronic device 200 by applying the fine adjustment value of the fit that was manually adjusted by the user in the exercise mode in the past.

In operation 1455, according to an embodiment, the electronic device 200 may operate the sensor module 176 (e.g., sensor circuit) to measure biometric data of the user.

According to an embodiment, the processor 320 may operate the sensor module 176 (e.g., sensor circuit) to measure biometric data of the user.

In operation 1460, according to an embodiment, the electronic device 200 may store, in a memory (e.g., memory 330 of FIG. 3a), the biometric data of the user acquired by operating the sensor module 176 (e.g., sensor circuit). For example, the electronic device 200 may adjust the fit of the electronic device 200 based on the biometric data of the user acquired by operating the sensor module 176 (e.g., sensor circuit). For example, the electronic device 200 may transmit the biometric data acquired by operating the sensor module 176 (e.g., sensor circuit) to an external electronic device (e.g., external smartphone, external server (e.g., server 108 of FIG. 1)).

According to an embodiment, the processor 320 store, in the memory (e.g., memory 330 of FIG. 3a), the biometric data of the user acquired by operating the sensor module 176 (e.g., sensor circuit). For example, the processor 320 may adjust the fit of the electronic device 200 based on the biometric data of the user acquired by operating the sensor module 176 (e.g., sensor circuit). For example, the processor 320 may transmit the biometric data acquired by operating the sensor module 176 (e.g., sensor circuit) to the external electronic device (e.g., external smartphone, external server (e.g., server 108 of FIG. 1)).

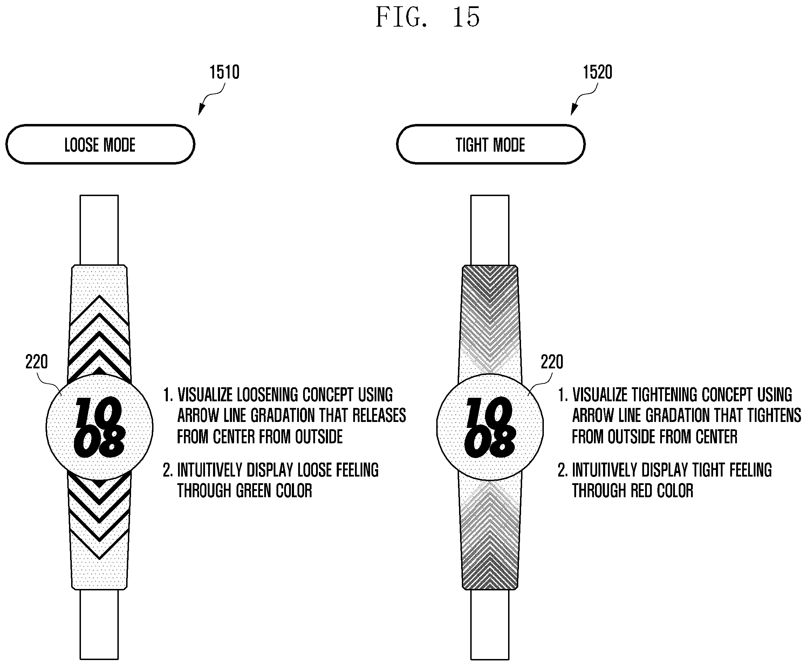

FIG. 15 illustrates an example of displaying (e.g., visually displaying) through a user interface that the tightness degree (e.g., loosening or tightening) of an electronic device (e.g., wearable electronic device, smart watch, smart band) is adjusted.

With reference to FIG. 15, according to an embodiment, the electronic device (e.g., electronic device 200 of FIG. 2a and FIG. 3a) (e.g., wearable electronic device, smart watch) may display on a display (e.g., display 220 of FIG. 2a and FIG. 2b) that the fit is adjusted to be loose (1510).

For example, the user interface (or content) indicating that the fit is adjusted to be loose may be displayed on the display 220, such that the user may intuitively recognize the fit being adjusted to be loose automatically depending on the situation. For example, the electronic device 200 may visualize and display, on the display 220, the loosening concept using an arrow line gradation that releases from the center to the outside. For example, the electronic device 200 may display, on the display 220, a loosening feeling to be intuitively recognized by the user through a green color.

According to an embodiment, the electronic device 200 (e.g., wearable electronic device, smart watch) may display, on the display 220, that the fit is adjusted to be tight (e.g., tight) (1520).

For example, the user interface (or content) indicating that the fit is adjusted to be tightened (e.g., tight) may be displayed on the display 220 such that the user may intuitively recognize the fit being adjusted to be tightened (e.g., tight) automatically depending on the situation. For example, the electronic device 200 may visualize and display, on the display 220, the tightening concept using an arrow line gradation that tightens from the outside to the center. For example, the electronic device 200 may display, on the display 220, a tightening feeling to be intuitively recognized by the user through a red color.

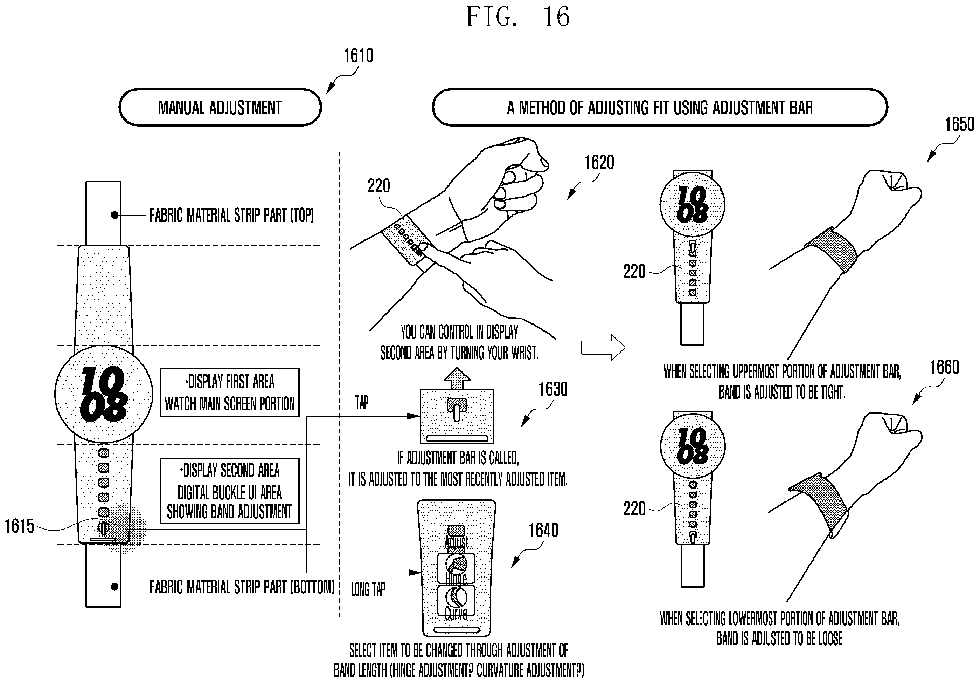

FIG. 16 illustrates an example of providing a fine adjustment menu such that a user may manually fine-adjust the tightness degree (e.g., loosening or tightening) of an electronic device (e.g., wearable electronic device, smart watch).

With reference to FIG. 16, according to an embodiment, after the fit of the electronic device 200 is adjusted to a preset value (e.g., default value for each mode), the electronic device 200 may provide a function capable of fine-adjusting the tightness degree (e.g., loosening or tightening).

According to an embodiment, when the user desires fine-adjustment of the fit while the fit of the electronic device 200 (e.g., wearable electronic device, smart watch) is adjusted to a preset value, the tightness degree (e.g., loosening or tightening) may be finely adjusted by operating in a manual fit mode (1610).

According to an embodiment, the electronic device 200 may display a fit adjustment bar menu 1615 (e.g., digital buckle user interface) to enable fine-adjustment of the tightness degree (e.g., loosening or tightening).

According to an embodiment, if the fit adjustment bar menu 1615 (e.g., digital buckle user interface) is activated and the user short-touches the fit adjustment bar menu 1615 (e.g., digital buckle user interface), the user may adjust the fit with a recently adjusted item (e.g., finely adjusted fit value) (1630).

According to an embodiment, if the fit adjustment bar menu 1615 (e.g., digital buckle user interface) is activated and the user long-touches the fit adjustment bar menu 1615 (e.g., digital buckle user interface), the fit adjustment bar menu 1615 (e.g., digital buckle user interface) may be displayed to allow new fine adjustment (1640).

According to an embodiment, in a state in which the fit of the electronic device 200 (e.g., wearable electronic device, smart watch) is adjusted to a preset value, the fit may be finely adjusted to be tightened (e.g., tight) by the user's selection on fine-adjustment (1650). For example, if the uppermost part of the fit adjustment bar menu 1615 (e.g., digital buckle user interface) is touched, the fit of the electronic device 200 may be adjusted to be most tightened (e.g., tight).

According to an embodiment, in a state in which the fit of the electronic device 200 (e.g., wearable electronic device, smart watch) is adjusted to a preset value, the fit may be finely adjusted to be loose by the user's selection on fine adjustment (1660). For example, if a lowermost portion of the fit adjustment bar menu 1615 (e.g., digital buckle user interface) is touched, the fit of the electronic device 200 may be adjusted to be most loose.

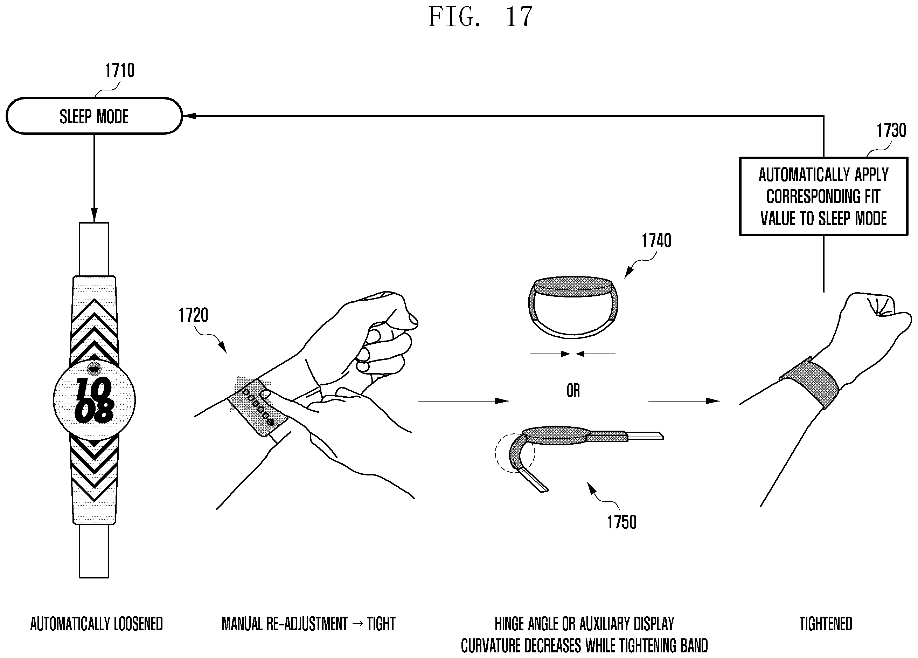

FIG. 17 illustrates an example of storing a fine adjustment value of the tightness degree (e.g., loosening or tightening) of an electronic device (e.g., wearable electronic device, smart watch) applied by a user, and automatically adjusting the tightness degree (e.g., loosening or tightening) of the electronic device (e.g., wearable electronic device, smart watch) using the fine adjustment value under the same conditions.

With reference to FIG. 17, the electronic device (e.g., electronic device 200 of FIG. 2a and FIG. 3a) may operate a sensor module (e.g., sensor module 176 of FIG. 3a, sensor circuit) to measure movement of the user.

According to an embodiment, when the user is in a sleep state, the electronic device 200 may operate in a sleep mode (1710) to adjust the fit of the electronic device 200.

According to an embodiment, for example, when the user desires fine adjustment of the fit while the user is in the sleep mode state, the electronic device 200 may operate in a manual fit mode to fine-adjust the tightness degree (e.g., loosening or tightening) (1720).

For example, the fit of the electronic device 200 may be adjusted by adjusting the angle of a hinge (e.g., hinge 230 of FIG. 2a) of the electronic device 200 (1740).

For example, the fit of the electronic device 200 may be adjusted by adjusting the bending curvature of a display (e.g., display 220 of FIG. 2a) of the electronic device 200 (1750).

For example, the electronic device 200 may store a fine adjustment value used to fine-adjust the fit of the electronic device 200 in the sleep mode in the memory (e.g., memory 330 of FIG. 3a). The electronic device 200 may acquire the fine adjustment value in the sleep mode stored in the memory (e.g., memory 330 of FIG. 3a) when applying to the sleep mode later, and may adjust the fit by applying the fine adjustment value in the sleep mode (1730).

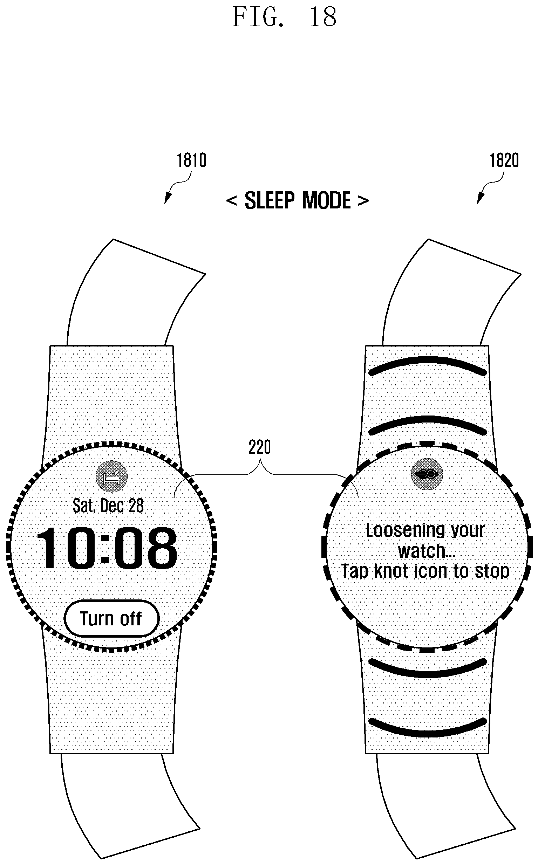

FIG. 18 illustrates an example of providing a function capable of releasing the tightness degree (e.g., loosening or tightening) of an automatically adjusted electronic device (e.g., wearable electronic device, smart watch) in a sleep mode.

With reference to FIG. 18, according to an embodiment, the electronic device (e.g., electronic device 200 of FIG. 2a and FIG. 3a) may determine whether the user is in a sleep state by operating a sensor module (e.g., sensor module 176 of FIG. 3a, sensor circuit) to measure the movement of the user. When the user is in the sleep state, the electronic device 200 may adjust the fit from a tight state 1810 to a loose state 1820 to suit the sleep mode.

According to an embodiment, the processor 320 (e.g., processor 320 of FIG. 3a) may determine whether the user is in the sleep state by operating the sensor module (e.g., sensor module 176 of FIG. 3a, sensor circuit) to measure the movement of the user. When the user is in the sleep state, the processor 320 may adjust the fit from the tight state 1810 to the loose state 1820 to suit the sleep mode.

According to an embodiment, the electronic device 200 may display a user interface (e.g., content) for releasing the sleep mode on the display 220, such that the user may release a sleep mode state and adjust the fit to another mode state.

According to an embodiment, the processor 320 may display a user interface (e.g., content) for releasing the sleep mode on the display 220, such that the user may release a sleep mode state and adjust the fit to another mode state.

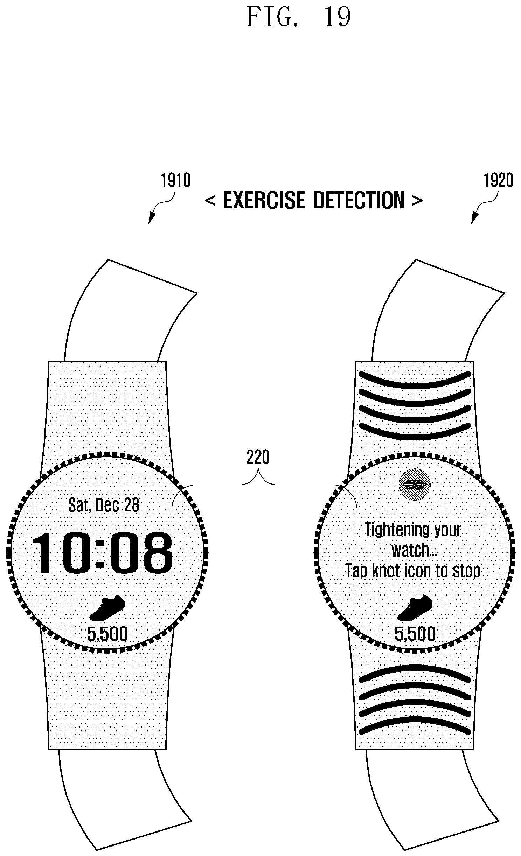

FIG. 19 illustrates an example of providing a function capable of releasing the tightness degree (e.g., loosening or tightening) of an automatically adjusted electronic device (e.g., wearable electronic device, smart watch) in an exercise mode.

With reference to FIG. 19, according to an embodiment, the electronic device (e.g., electronic device 200 of FIG. 2a and FIG. 3a) may determine whether the user is in an exercise state by operating the sensor module (e.g., sensor module 176 of FIG. 3a, sensor circuit) to measure the movement of the user. When the user is in the exercise state, the electronic device 200 may adjust the fit from a loose state 1910 to a tight state 1920 to suit the exercise mode.

According to an embodiment, the processor 320 (e.g., processor 320 of FIG. 3a) may determine whether the user is in the exercise state by operating the sensor module (e.g., sensor module 176 of FIG. 3a, sensor circuit) to measure the movement of the user. When the user is in the exercise state, the processor 320 may adjust the fit from the loose state 1910

to the tight state 1920 to suit the exercise mode.

According to an embodiment, the electronic device 200 may display a user interface (e.g., content) for releasing the exercise mode on the display 220 (e.g., display 220 of FIG. 2a) such that the user may release an exercise mode state and adjust the fit to another mode state.

According to an embodiment, the processor 320 may display a user interface (e.g., content) for releasing the exercise mode on the display 220 (e.g., display 220 of FIG. 2a) such that the user may release an exercise mode state and adjust the fit to another mode state.

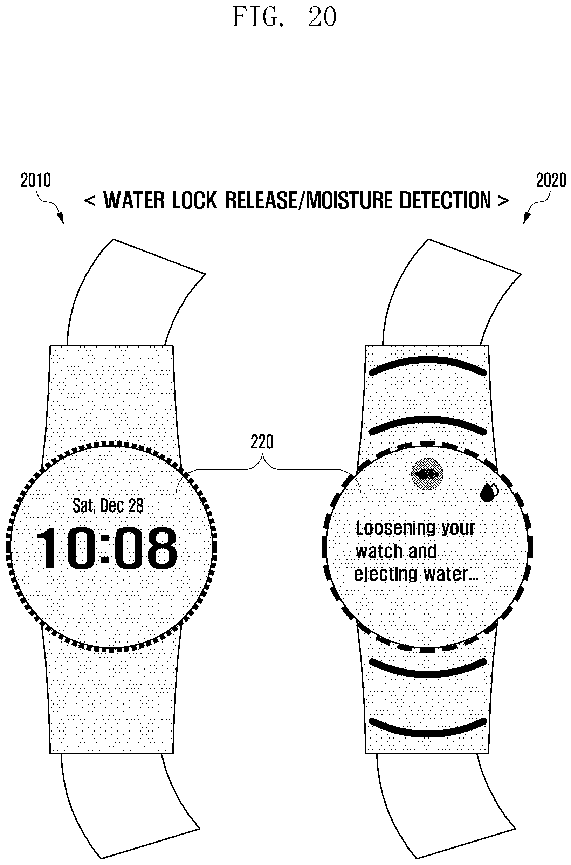

FIG. 20 illustrates an example of providing a function capable of releasing the tightness degree (e.g., loosening or tightening) of an automatically adjusted electronic device (e.g., wearable electronic device, smart watch) in a swimming mode.

With reference to FIG. 20, according to an embodiment, the electronic device (e.g., electronic device 200 of FIG. 2a and FIG. 3a) may operate the sensor module (e.g., sensor module 176 of FIG. 3a, sensor circuit) to measure the movement of the user and humidity. The electronic device 200 may release water lock for measuring the humidity, and may adjust the fit from a tight state 2010 to a loose state 2020 to suit a water lock mode.

According to an embodiment, the processor 320 (e.g., processor 320 of FIG. 3a)) may operate the sensor module (e.g., sensor module 176 of FIG. 3a, sensor circuit) to measure the movement of the user and humidity. The electronic device 200 may release water lock for measuring the humidity, and may adjust the fit from the tight state 2010 to the loose state 2020 to suit the water lock mode.

According to an embodiment, the electronic device 200 may display a user interface (e.g., content) for releasing the water lock mode on the display 220 such that the user may release the water lock mode and adjust the fit to another mode state.

According to an embodiment, the processor 320 may display a user interface (e.g., content) for releasing the water lock mode on the display 220 such that the user may release the water lock mode and adjust the fit to another mode state.

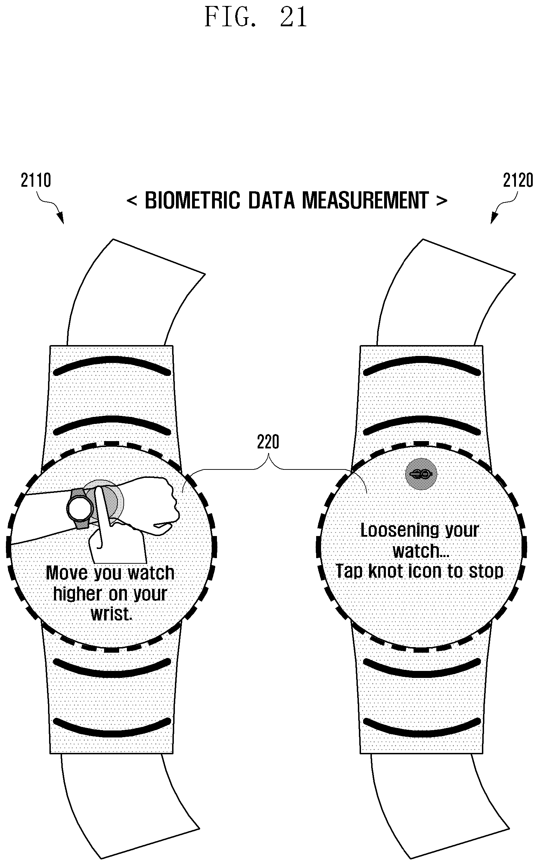

FIG. 21 illustrates an example of providing a function capable of releasing the tightness degree (e.g., loosening or tightening) of an automatically adjusted electronic device (e.g., wearable electronic device, smart watch) in a biometric data (e.g., biometric information) measurement mode.

With reference to FIG. 21, according to an embodiment, the electronic device 200 may operate the sensor module (e.g., sensor module 176 of FIG. 3a, sensor circuit) to measure biometric data of the user.

For example, the electronic device 200 may display a user interface (e.g., content) for guiding the user's body motion on the display 220, such that biometric measurement of the user may be smoothly performed

For example, the electronic device 200 may display a user interface (e.g., content) for releasing a biometric data measurement mode such that the user may release the biometric data measurement mode and may adjust the fit to another mode state.

According to an embodiment, the processor 320 may operate the sensor module 176 (e.g., sensor circuit) to measure biometric data of the user.

For example, the processor 320 may display a user interface (e.g., content) for guiding the user's body motion on the display 220, such that biometric measurement of the user may be smoothly performed.

For example, the processor 320 may display a user interface (e.g., content) for releasing a biometric data measurement mode such that the user may release the biometric data measurement mode and may adjust the fit to another mode state.

According to an embodiment, the electronic device 200 may store the biometric data of the user acquired by operating the sensor module 176 (e.g., sensor circuit) in the memory (e.g., memory 330 of FIG. 3a).

According to an embodiment, the processor 320 may store the biometric data of the user acquired by operating the sensor module 176 (e.g., sensor circuit) in the memory (e.g., memory 330 of FIG. 3a).

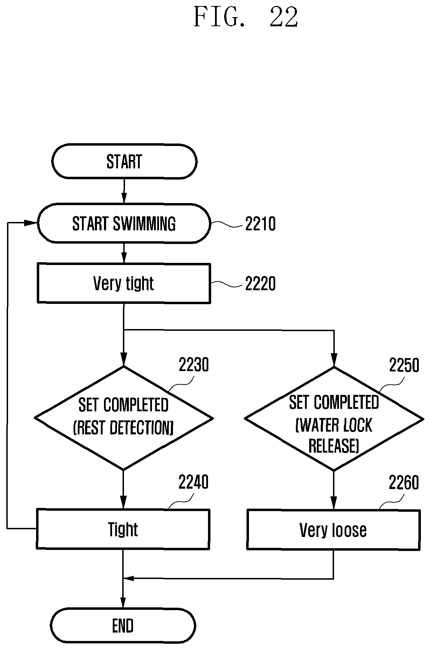

FIG. 22 is a flowchart illustrating an operating method of an electronic device (e.g., wearable electronic device, smart watch, smart band) according to an embodiment of the disclosure.

With reference to FIG. 22, according to an embodiment, in operation 2210, the electronic device (e.g., electronic device 200 of FIG. 2a and FIG. 3a) may determine whether the user is in a swimming state by operating a sensor module (e.g., sensor module 176 of FIG. 3a, sensor circuit) to measure the movement of the user.

According to an embodiment, a processor (e.g., processor 320 of FIG. 3a) may determine whether the user is in the swimming state by operating the sensor module 176 (e.g., sensor circuit) to measure the movement of the user.

In operation 2220, according to an embodiment, when the user is in the swimming state, the electronic device 200 may adjust the fit to suit a swimming mode. For example, when the user is in the swimming state, the electronic device 200 may adjust the fit of the electronic device 200 to be very strongly tightened (e.g., very tight) by applying a most strongly tightening fit value among nine fit values listed in Table 1.

According to an embodiment, when the user is in the swimming state, the processor 320 may adjust the fit to suit the swimming mode. For example, when the user is in the swimming state, the processor 320 may adjust the fit of the

electronic device 200 to be very strongly tightened (e.g., very tight) by applying a most strongly tightening fit value among nine fit values listed in Table 1.

In operation 2230, according to an embodiment, the electronic device 200 may determine whether the user has terminated swimming exercise by operating the sensor module 176 (e.g., sensor circuit) to measure the movement of the user.

According to an embodiment, the processor 320 may determine whether the user has terminated swimming exercise by operating the sensor module 176 (e.g., sensor circuit) to measure the movement of the user.

In operation 2240, according to an embodiment, when swimming of the user is terminated, the electronic device 200 may adjust the fit to the "tight" fit, which is one stage looser than the "very tight" fit applied in the swimming mode.

According to an embodiment, when swimming of the user is terminated, the processor 320 may adjust the fit to the "tight" fit, which is one stage looser than the "very tight" fit applied in the swimming mode.

In operation 2250, according to an embodiment, when swimming of the user is terminated, the electronic device 200 may release water lock.

According to an embodiment, when swimming of the user is terminated, the processor 320 may release water lock.

In operation 2260, according to an embodiment, the electronic device 200 may adjust the fit of the electronic device 200 to be very loose by applying a very loose fit value among nine fit values listed in Table 1, such that the humidity may be quickly removed.

According to an embodiment, the processor 320 may adjust the fit of the electronic device 200 to be very loose by applying a very loose fit value among nine fit values listed in Table 1, such that the humidity may be quickly removed.

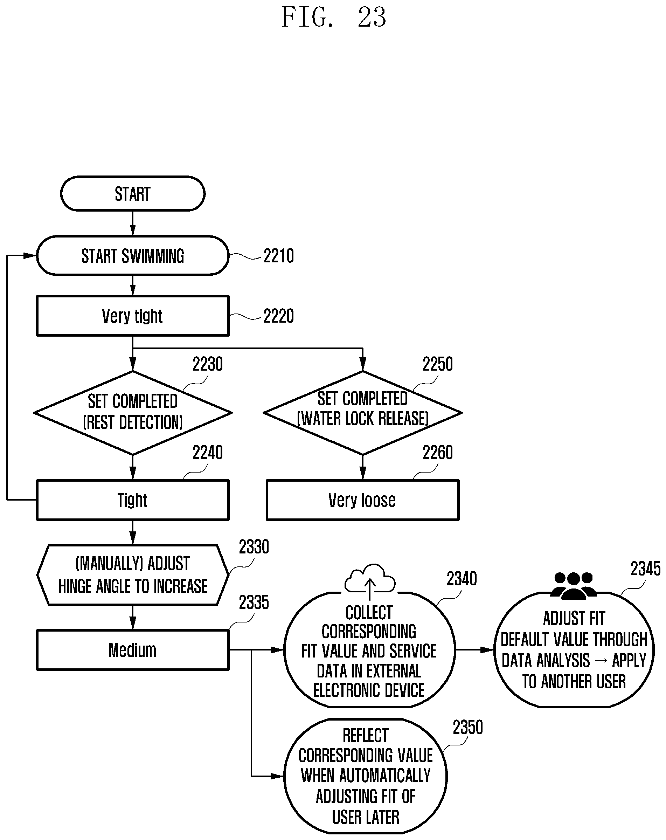

FIG. 23 is a flowchart illustrating an operating method of an electronic device (e.g., wearable electronic device, smart watch, smart band) according to an embodiment of the disclosure.

In describing the operating method of the electronic device illustrated in FIG. 23, the detailed description of the operating method that is identical (or similar) to the operating method of the electronic device illustrated in FIG. 22 may be omitted.

With reference to FIG. 23, according to an embodiment, the electronic device (e.g., electronic device 200 of FIG. 2a and FIG. 3a, wearable electronic device, smart watch) according to an embodiment of the disclosure may operate in conjunction with an external electronic device (e.g., external server (e.g., server 108 of FIG. 1), smartphone, tablet PC, laptop PC) and/or an external wearable electronic device (e.g., audio electronic device, wireless earphone).

In operation 2330, according to an embodiment, after the swimming mode is terminated, the electronic device 200 may adjust the angle of the hinge (e.g., hinge 230 of FIG. 2a) to increase.

According to an embodiment, after the swimming mode is terminated, the processor (e.g., processor 320 of FIG. 3a) may adjust the angle of the hinge 230 to increase.

In operation 2335, according to an embodiment, the fit of the electronic device 200 may be adjusted to be loose (e.g., medium in Table 1). For example, after the swimming mode is terminated, the fit of the electronic device 200 may be adjusted to be loose (e.g., medium in Table 1) by adjusting the angle of the hinge 230 to increase in a manual mode according to the user's selection.

In operation 2340, according to an embodiment, the electronic device 200 may store a fit value adjusted by the user in the memory (e.g., memory 330 of FIG. 3a). For example, the electronic device 200 may transmit the fit value adjusted by the user to an external electronic device (e.g., external smartphone). For example, the electronic device 200 may transmit the fit value adjusted by the user to an external server (e.g., server 108 of FIG. 1).

In operation 2345, according to an embodiment, the external electronic device (e.g., external smartphone) may analyze the fit value adjusted by the user, acquired from the electronic device 200. The external electronic device (e.g., external smartphone) may provide the fit value adjusted by the user to an electronic device of another user such that the fit value adjusted by the user, acquired from the electronic device 200, may be applied to the other user.

In operation 2350, when a state identical to a state in which the fit value adjusted by the user is applied occurs later, the electronic device 200 may apply the fit value adjusted by the user.

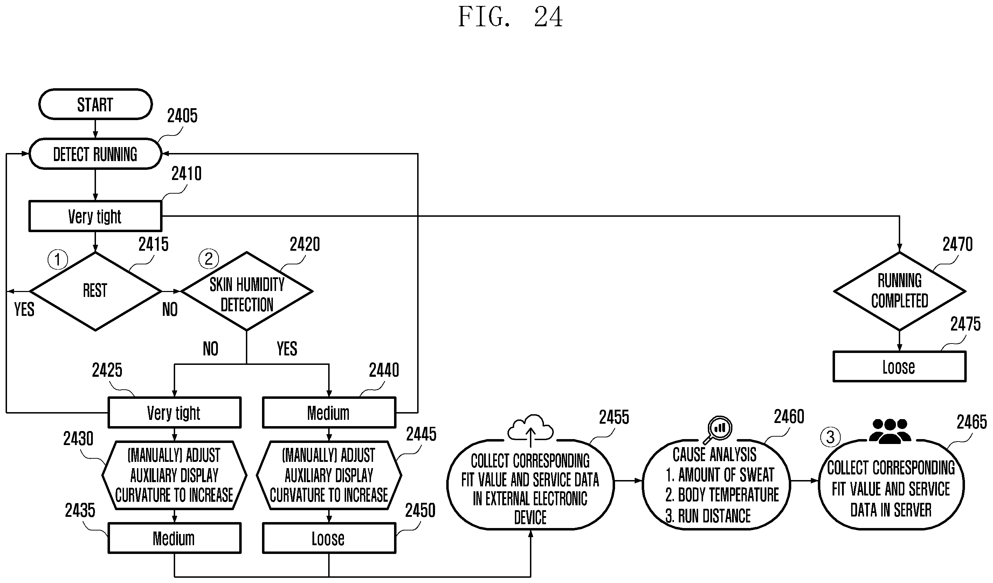

FIG. 24 is a flowchart illustrating an operating method of an electronic device (e.g., wearable electronic device, smart watch, smart band) according to an embodiment of the disclosure.

With reference to FIG. 24, the electronic device (e.g., electronic device 200 of FIG. 2a and FIG. 3a, wearable electronic device, smart watch) according to an embodiment of the disclosure may operate in conjunction with an external electronic device (e.g., external server (e.g., server of FIG. 1)), smartphone, tablet PC, laptop PC) and/or an external wearable electronic device (e.g., audio electronic device, wireless earphone).

According to an embodiment, in operation 2405, the electronic device (e.g., electronic device 200 of FIG. 2a and FIG. 3a) may determine whether the user is in a state of exercise (e.g., running) by operating a sensor module (e.g., sensor module 176 of FIG. 3a, sensor circuit) to measure the movement of the user.

According to an embodiment, a processor (e.g., processor 320 of FIG. 3a) may determine whether the user is in the state of exercise (e.g., running) by operating the sensor module (e.g., sensor module 176 of FIG. 3a, sensor circuit) to

measure the movement of the user.

In operation 2410, according to an embodiment, when the user is in the state of exercise (e.g., running), the electronic device 200 may adjust the fit to suit an exercise (e.g., running) mode. For example, when the user is in the state of exercise (e.g., running), the electronic device 200 may adjust the fit of the electronic device 200 to be very strongly tightened (e.g., very tight) by applying the most strongly tightening fit value among nine fit values listed in Table 1.

According to an embodiment, when user is in the state of exercise (e.g., running), the processor 320 may adjust the fit to suit an exercise (e.g., running) mode. For example, when the user is in the state of exercise (e.g., running), the processor 320 may adjust the fit of the electronic device 200 to be very strongly tightened (e.g., very tight) by applying the most strongly tightening fit value among nine fit values listed in Table 1.

In operation 2415, according to an embodiment, the electronic device 200 may determine whether the user is resting by operating the sensor module 176 (e.g., sensor circuit) to measure the movement of the user.

According to an embodiment, the processor 320 may determine whether the user is resting by operating the module (sensor module 176 (e.g., sensor circuit)) to measure the movement of the user.

If the user is resting as the determination result of operation 2415, subsequent operations may be performed by returning to operation 2405.

Unless the user is resting as the determination result of operation 2415, operation 2420 may be performed.

In operation 2420, according to an embodiment, the electronic device 200 may detect the skin humidity of the user by operating the module (sensor module 176 (e.g., sensor circuit)).

According to an embodiment, the electronic device 200 may detect skin humidity of the user by operating the module (the sensor module 176 (e.g., sensor circuit)).

According to an embodiment, unless the skin humidity of the user does not exceed a reference value, operation 2425 may be performed.

According to an embodiment, if the skin humidity of the user exceeds a reference value, operation 2440 may be performed.

In operation 2425, according to an embodiment, the electronic device 200 may adjust the fit to "very tight" in Table 1 since the humidity does not exceed the reference value.

According to an embodiment, since the humidity does not exceed the reference value, the processor 320 may adjust the fit to "very tight" in Table 1.

In operation 2430, when the user manually fine-adjusts a fit value, the electronic device 200 may adjust the bending curvature of the first display (e.g., first display 222 of FIG. 2a) and the second display (e.g., second display 223 of FIG. 2a) in the display (e.g., display 220 of FIG. 2a) to increase according to the user's fine-adjustment for the fit value.

According to an embodiment, the processor 320 may adjust the bending curvature of the first display 222 and the second display 223 in the display 220 to increase according to the user's fine-adjustment for the fit value.

In operation 2435, according to an embodiment, the electronic device 200 may adjust the fit of the electronic device 200 to be looser than a previous state by applying a medium fit value (medium) among nine fit values listed in Table 1, such that the humidity may be quickly removed.

According to an embodiment, the processor 320 may adjust the fit of the electronic device 200 to be looser than a previous state by applying a medium fit value (medium) among nine fit values listed in Table 1, such that the humidity may be quickly removed.

In operation 2440, according to an embodiment, since the humidity exceeds the reference value, the electronic device 200 may adjust the fit to "medium" in Table 1 such that the humidity may be quickly removed.

According to an embodiment, since the humidity exceeds a reference value, the processor 320 may adjust the fit to "medium" in Table 1 such that the humidity may be quickly removed.

In operation 2445, when the user manually fine-adjusts the fit value, the electronic device 200 may adjust the bending curvature of the first display 222 and the second display 2230 in the display 220 to increase in accordance with the user's fine-adjustment for the fit value.

According to an embodiment, when the user manually fine-adjusts the fit value, the processor 320 may adjust the bending curvature of the first display 222 and the second display 2230 in the display 220 to increase in accordance with the user's fine-adjustment for the fit value.

In operation 2450, according to an embodiment, the electronic device 200 may adjust the fit of the electronic device 200 to be looser than a previous state by applying a loose fit value (loose) among nine fit values listed in Table 1, such that the humidity may be quickly removed.

According to an embodiment, the processor 320 may adjust the fit of the electronic device 200 to be looser than a previous state by applying a loose fit value (loose) among nine fit values listed in Table 1, such that the humidity may be quickly removed.

In operation 2445, according to an embodiment, the electronic device 200 may store the fit value adjusted by the user in the memory (e.g., memory 330 of FIG. 3a). For example, the electronic device 200 may transmit the fit value adjusted by the user to the external electronic device (e.g., external smartphone). For example, the electronic device 200

may transmit the fit value adjusted by the user to the external server (e.g., server 108 of FIG. 1).

In operation 2460, according to an embodiment, the external electronic device (e.g., external smartphone) may analyze the fit value adjusted by the user, acquired from the electronic device 200. For example, the external electronic device may analyze the amount of sweat generated on the skin of the user, the user's body temperature, and the distance the user has run, and may analyze the cause of the user's skin humidity that exceeds the set humidity

In operation 2465, according to an embodiment, the analysis result of the cause of the user's skin humidity may be provided to the external server (e.g., server 108 of FIG. 1).

The external server 108 may provide the fit value adjusted by the user to an electronic device of another user, such that the fit value adjusted by the user, acquired from the electronic device 200, may be applied to the other user.

In operation 2470, according to an embodiment, the electronic device 200 may determine whether exercise (e.g., running) is completed by operating the sensor module 176 (e.g., sensor circuit) to measure the movement of the user.

According to an embodiment, the processor 320 may determine whether exercise (e.g., running) is completed by operating the sensor module 176 (e.g., sensor circuit) to measure the movement of the user.

In operation 2475, According to an embodiment, when the user's exercise (e.g., running) is completed, the electronic device 200 may adjust the fit to be loose.

According to an embodiment, when the user's exercise (e.g., running) is completed, the processor 320 may adjust the fit to be loose.

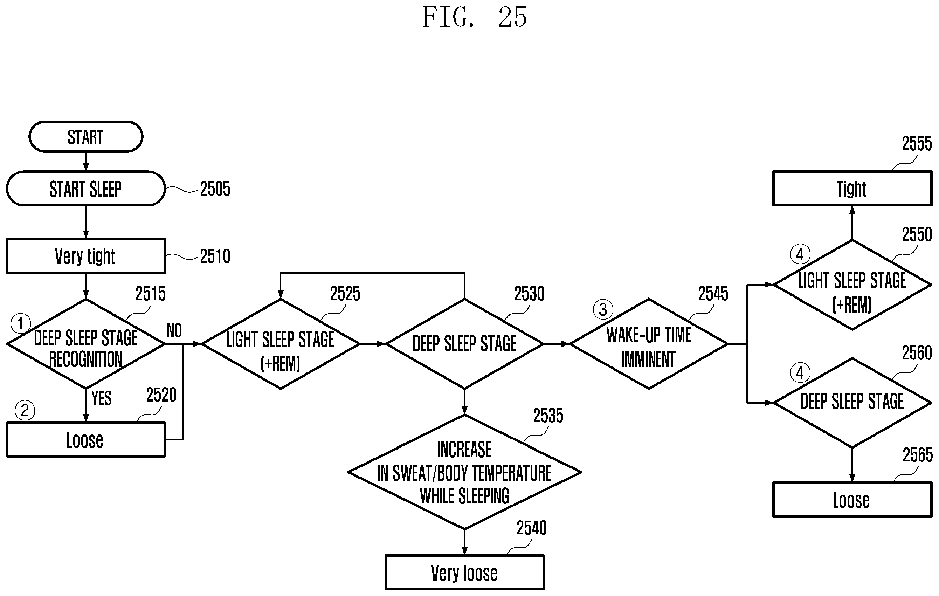

FIG. 25 is a flowchart illustrating an operating method of an electronic device (e.g., wearable electronic device, smart watch, smart band) according to an embodiment of the disclosure.

With reference to FIG. 25, in operation 2505, according to an embodiment, the electronic device (e.g., electronic device 200 of FIG. 2a and FIG. 3a) may determine whether the user is in a sleep state by operating a sensor module (e.g., sensor module 176 of FIG. 3a, sensor circuit) to measure the movement of the user.

According to an embodiment, a processor (e.g., processor 320 of FIG. 3a) may determine whether the user is in the sleep state by operating the sensor module 176 (e.g., sensor circuit) to measure the movement of the user.

In operation 2510, according to an embodiment, when the user is in the sleep state, the electronic device 200 may adjust the fit to a tight state to suit a sleep mode.

According to an embodiment, when the user is in the sleep state, the processor 320) may adjust the fit to a tight state to suit the sleep mode.

In operation 2515, according to an embodiment, the electronic device 200 may determine whether the user is in a deep sleep state by operating the sensor module 176 (e.g., sensor circuit).

According to an embodiment, the processor 320 may determine whether the user is in the deep sleep state by operating the sensor module 176 (e.g., sensor circuit).

When the user is in the deep sleep state as the determination result of operation 2515, operation 2520 may be performed.

When the user is not in the deep sleep state as the determination result of operation 2515, operation 2525 may be performed.

In operation 2520, according to an embodiment, the electronic device 200 may adjust the fit to be loose to suit a deep sleep mode, and may adjust the fit to be loose to prevent the user from waking up during deep sleep. Here, the fit may be adjusted to be loose at a level at which the sensor module 176 may smoothly measure the user's movement and heart rate.

According to an embodiment, the processor 320 may adjust the fit to be loose to suit the deep sleep mode, and may adjust the fit to be loose to prevent the user from waking up during deep sleep. Here, the fit may be adjusted to be loose at a level at which the sensor module 176 may smoothly measure the user's movement and heart rate.

In operation 2525, according to an embodiment, the electronic device 200 may identify whether the user changes from a light sleep state to a deep sleep state (2530).

According to an embodiment, the processor 320 may identify whether the user changes from the light sleep state to the deep sleep state (2530).

In operation 2525, according to an embodiment, when the user changes to the deep sleep state, the electronic device 200 may determine whether the user's physical ecology has changed by operating the sensor module 176 (e.g., sensor circuit). For example, the electronic device 200 may determine whether the user sweating has increased or whether the user's body temperature has risen.

According to an embodiment, when the user changes to the deep sleep state, the processor 320 may determine whether the user's physical ecology has changed by operating the sensor module 176 (e.g., sensor circuit). For example, the processor 320 may determine whether the user sweating has increased or whether the user's body temperature has risen.

In operation 2540, according to an embodiment, if the user's sweating increases and body temperature rises, the electronic device 200 may adjust the fit to be loose such that the sweat may evaporate and the body temperature may drop.

According to an embodiment, if the user's sweating increases and body temperature rises, the processor 320

may adjust the fit to be loose such that the sweat may evaporate and the body temperature may drop.

In operation 2545, according to an embodiment, the electronic device 200 may identify whether the user's wake-up time is imminent. For example, the electronic device 200 may identify whether the set wake-up time or alarm time, to identify whether the wake-up time is imminent.

According to an embodiment, the processor 320 may identify whether the user's wake-up time is imminent. For example, the processor 320 may identify whether the set wake-up time or alarm time, to identify whether the wake-up time is imminent.

In operation 2550, according to an embodiment, the electronic device 200 may determine whether the user is in a light sleep state although the wake-up time is imminent.

According to an embodiment, the processor 320 may determine whether the user is in the light sleep state although the wake-up time is imminent.

In operation 2555, according to an embodiment, when the user is in the light sleep state, the electronic device 200 may adjust the fit to be tight such that the user may wake up from the light sleep state.

According to an embodiment, when the user is in the light sleep state, the processor 320 may adjust the fit to be tight such that the user may wake up from the light sleep state.

In operation 2560, according to an embodiment, the electronic device 200 may determine whether the user is in the deep sleep state although the wake-up time is imminent.

According to an embodiment, the processor 320 may determine whether the user is in the deep sleep state although the wake-up time is imminent.

In operation 2565, according to an embodiment, when the user is in the deep sleep state, the electronic device 200 may adjust the fit to be loose to prevent the user from waking from the deep sleep stage.

According to an embodiment, when the user is in the deep sleep state, the processor 320 may adjust the fit to be loose to prevent the user from waking from the deep sleep stage.

A wearable electronic device (e.g., wearable electronic device 200 of FIG. 2a to FIG. 3b) according to an embodiment of the disclosure may include a housing (e.g., housing 210 of FIG. 2a) including a first housing structure (e.g., first housing structure 211 of FIG. 2a), a second housing structure (e.g., second housing structure 212 of FIG. 2a) connected to the first housing structure 211), and a third housing structure (e.g., third housing structure 213 of FIG. 2a); a first hinge driving module (e.g., first hinge driving module 231 of FIG. 3b) configured to connect the first side of the first housing structure 211 and the second housing structure 212 such that the first housing structure 211 and the second housing structure 212 are folded and unfolded; a second hinge driving module (e.g., second hinge driving module 232 of FIG. 3b) configured to connect the second side of the first housing structure 211 and the third housing structure 213 such that the first housing structure 211 and the third housing structure 213 are folded and unfolded; a hinge driving unit (e.g., hinge driving unit 340 of FIG. 3a) configured to drive the first hinge driving module 231 and the second hinge driving module 232; a display (e.g., display 220 of FIG. 2a) arranged in the housing 210; a sensor module (e.g., sensor module 176 of FIG. 3a) configured to sense the angle between the housing structures (211, 212, 213), and to sense the bending curvature of the display 220; a memory (e.g., memory 330 of FIG. 3a) including at least one storage medium that stores instructions; and at least one processor (e.g., processor 320 of FIG. 3a) including a processing circuit. When the instructions are executed individually or collectively by the at least one processor 320, the wearable electronic device 200 may detect a state in which the wearable electronic device 200 is worn on the wrist of the user using the sensor module 176.

When the instructions are executed individually or collectively by the at least one processor 320, the wearable electronic device 200 may identify the activity state of the user using the sensor module 176 based on detecting the state in which it is worn on the wrist of the user. When the instructions are executed individually or collectively by the at least one processor 320, the wearable electronic device 200 may adjust at least one of the angle between the housing structures (211, 212, 213) and the bending curvature of the display 220 based on the change in the activity state of the user.

According to an embodiment, when the instructions are executed by the at least one processor 320, the wearable electronic device 200 may adjust the angle between the first housing structure 211 and the second housing structure 212 by driving the first hinge driving module 231. When the instructions are executed by the at least one processor 320, the wearable electronic device 200 may adjust the angle between the first housing structure 211 and the third housing structure 213 by driving the second hinge driving module 232.

According to an embodiment, the display 220 may include the first display portion 221, the second display portion 223 arranged on the first side of the first display portion 221, and the third display portion 223 arranged on the second side of the first display portion 221. The second housing structure 212 may include the first curvature adjustment module 371 configured to adjust the bending curvature of the second display portion. The third housing structure 213 may include the second curvature adjustment module 372 configured to adjust the bending curvature of the third display portion. When the instructions are executed by the at least one processor 320, the wearable electronic device 200 may adjust the bending curvature of the second display portion 2202 and the third display portion 2203 using the first curvature adjustment module 371 and the second curvature adjustment module 372 based on the change in the activity state of the user.

According to an embodiment, the first display portion 221 may be arranged to be supported by the first housing

structure 211. The second display portion 223 may be arranged to be supported by the second housing structure 212. The third display portion 223 may be arranged to be supported by the third housing structure 213.

According to an embodiment, the display 220 may include the first display 221, the second display 222 arranged adjacent to the first side of the first display 221, and the third display 223 arranged adjacent to the first display 221. When the instructions are executed by the at least one processor 320, the wearable electronic device 200 may adjust the bending curvature of the second display 222 and the third display 223.

According to an embodiment, the first display 221 may be arranged to be supported by the first housing structure 211. The second display 222 may be arranged to be supported by the second housing structure 212. The third display 223 may be arranged to be supported by the third housing structure 213.

According to an embodiment, when the instructions are executed by the at least one processor 320, the wearable electronic device 200 may sense the movement of the wearable electronic device 200 by operating the sensor module 176. When the instructions are executed by the at least one processor 320, the wearable electronic device 200 may determine the activity state of the user based on the movement sensing result of the wearable electronic device 200. When the instructions are executed by the at least one processor 320, the wearable electronic device 200 may adjust at least one of the angle of the hinge and the bending curvature of the display based on the activity state of the user.

According to an embodiment, when the instructions are executed by the at least one processor 320, the wearable electronic device 200, when the user activity state is a first state, may adjust the first housing structure 211 and the second housing structure 212 to form a first angle by driving the first hinge driving module 231, and may adjust the first housing structure 211 and the third housing structure 213 to form a first angle by driving the second hinge driving module 232.

According to an embodiment, when the instructions are executed by the at least one processor 320, the wearable electronic device 200, when the user activity state of the user is the first state, may adjust the second display portion 223 and the third display portion 223 to form a first bending curvature.

According to an embodiment, when the instructions are executed by the at least one processor 320, the wearable electronic device 200, when the activity state of the user is a second state with more movement than the first state, may adjust the first housing structure 211 and the second housing structure 212 to form a second angle smaller than the first angle by driving the first hinge driving module 231, and may adjust the first housing structure 211 and the third housing structure 213 to form a second angle smaller than the first angle by driving the second hinge driving module 232.

According to an embodiment, when the instructions are executed by the at least one processor 320, the wearable electronic device 200, when the activity state of the user is a second state with more movement than the first state, may adjust the second display portion 223 and the third display portion 223 to form a second bending curvature smaller than the first bending curvature.

According to an embodiment, when the instructions are executed by the at least one processor 320, the wearable electronic device 200, when the activity state of the user is a third state with less movement than the first state, may adjust the first housing structure 211 and the second housing structure 212 to form a third angle greater than the first angle by driving the first hinge driving module 231, and may adjust the first housing structure 211 and the third housing structure 213 to form a third angle greater than the first angle by driving the second hinge driving module 232.

According to an embodiment, when the instructions are executed by the at least one processor 320, the wearable electronic device 200, when the activity state of the user is a third state with less movement than the first state, may adjust the second display portion 223 and the third display portion 223 to form a third bending curvature greater than the first bending curvature.

According to an embodiment, when the instructions are executed by the processor 320, the wearable electronic device 200 may sense the humidity around the wearable electronic device 200 by operating the sensor module 176. When the instructions are executed by the processor 320, the wearable electronic device 200 may adjust at least one of folding or unfolding of the housing 210 and the bending curvature of the display 220 based on the result of sensing humidity around the wearable electronic device 200. The wearable electronic device 200 may be adjusted to be tightened on the wrist, or the wearable electronic device 200 may be adjusted to be loosened on the wrist.

According to an embodiment, when the instructions are executed by the processor 320, the wearable electronic device 200 may display, on the display, a first user interface indicating a tightening state of the wearable electronic device 200 on the wrist of the user.

According to an embodiment, when the instructions are executed by the processor 320, the wearable electronic device 200 may display, on the display, a second user interface indicating an operation of adjusting the wearable electronic device 200 to be tightened on the wrist of the user or an operation of adjusting the wearable electronic device 200 to be loosened on the wrist of the user.

According to an embodiment, when the instructions are executed by the processor 320, the wearable electronic device 200 may display, on the display, a third user interface for adjusting the first angle and the first bending curvature to a first fine value in a state in which the housing 210 forms the first angle and the display 220 forms the first bending curvature.

According to an embodiment, when the instructions are executed by the processor 320, the wearable electronic device 200 may display, on the display, a fourth interface indicating a state in which the housing 210 forms the second

angle. When the instructions are executed by the processor 320, the wearable electronic device 200 may display, on the display, the fourth user interface for adjusting the second angle and the second bending curvature to a second fine value in a state in which the display 220 forms the second bending curvature.

According to an embodiment, when the instructions are executed by the processor 320, the wearable electronic device 200 may display, on the display, a fifth user interface indicating a state in which the housing 210 forms the third angle. When the instructions are executed by the processor 320, the wearable electronic device 200 may display, on the display, the fifth user interface for adjusting the third angle and the third bending curvature to a third fine value in a state in which the display 220 forms the third bending curvature.

According to an embodiment, when the instructions are executed by the processor 320, the wearable electronic device 200 may store at least one of the first fine value, the second fine value, and the third fine value in the memory 330. When the instructions are executed by the processor 320, the wearable electronic device 200 may apply at least one fine value suitable for the user's condition among the first fine value, the second fine value, and the third fine value in the memory 330.

In an operating method of the wearable electronic device 200 according to an embodiment of the disclosure, the wearable electronic device 200 may include the housing 210 including the first housing structure 211, the second housing structure 212 connected to the first housing structure 211, and the third housing structure 213; the display 220 arranged in the housing 210; the sensor module 176 configured to sense the angle between structures of the housing 210 and to sense the bending curvature of the display 220; the memory 330 including at least one storage medium that stores instructions; and at least one processor 320 including a processing circuit. The operating method, when the instructions are executed by the at least one processor 320, may cause the wearable electronic device 200 to detect a state in which the wearable electronic device 200 is worn on the wrist of the user using the sensor module 176. The operating method, when the instructions are executed by the at least one processor 320, may cause the wearable electronic device 200 to identify the activity state of the user using the sensor module 176 based on detecting the state in which it is worn on the wrist of the user. The operating method, when the instructions are executed by the at least one processor 320, may cause the wearable electronic device 200 to adjust at least one of the angle between the housing structures (211, 212, 213) and the bending curvature of the display 220 based on the change in the activity state of the user.

A recording medium according to an embodiment of the disclosure may store instructions readable by at least one processor of the wearable electronic device 200. The instructions, when executed by the at least one processor, may cause the wearable electronic device 200 to detect a state in which the wearable electronic device 200 is worn on the wrist of the user using the sensor module 176. The instructions, when executed by the at least one processor, may cause the wearable electronic device 200 to identify the activity state of the user using the sensor module 176 based on detecting the state in which the wearable electronic device 200 is worn on the wrist of the user. The instructions, when executed by the at least one processor, may cause the wearable electronic device 200 to perform an operation of adjusting at least one of the angle between the housing structures (211, 212, 213) and the bending curvature of the display 220 based on the change in the activity state of the user.

A wearable electronic device and an operating method thereof according to an embodiment of the disclosure may adjust the fit of an electronic device (e.g., wearable electronic device, smart watch, smart band) to be loosened or tightened (e.g., tight) according to the user's activity state (e.g., sleep, rest, exercise, swimming) and external environmental conditions (e.g., temperature, humidity).

A wearable electronic device and an operating method thereof according to an embodiment of the disclosure may display a user interface (e.g., content) on a display such that a user may intuitively recognize that the fit of an electronic device (e.g., wearable electronic device, smart watch, smart band) is adjusted.

A wearable electronic device and an operating method thereof according to an embodiment of the disclosure may provide a function capable of adjusting the fit of an electronic device (e.g., wearable electronic device, smart watch, smart band) to a default value and then fine-adjusting the fit according to the needs of the user.

The effects that may be achieved from the disclosure are not limited to the above-described effects and still other effects not mentioned herein will be clearly understood by one of ordinary skill in the art to which the disclosure pertains from the following description.

## Claims

**1.** A wearable electronic device (200) comprising:

a housing (210) including a first housing structure (211), a second housing structure (212) connected to the first housing structure (211), and a third housing structure (213);
a first hinge driving module (231) configured to connect the first side of the first housing structure (211) and the second housing structure (212) such that the first housing structure (211) and the second housing structure (212)

are folded and unfolded;
a second hinge driving module (232) configured to connect the second side of the first housing structure (211) and the third housing structure (213) such that the first housing structure (211) and the third housing structure (213) are folded and unfolded;
a hinge driving unit (340) configured to drive the first hinge driving module (231) and the second hinge driving module (232);
a display (220) arranged in the housing (210);
a sensor module (176) configured to sense the angle between housing structures (211, 212, 213) and to sense the bending curvature of the display (220);
a memory (330) including at least one storage medium that stores instructions; and
at least one processor (320) including a processing circuit,
wherein, when the instructions are executed individually or collectively by the at least one processor (320), the wearable electronic device (200) is configured to,
detect a state in which the wearable electronic device (200) is worn on the wrist of a user using the sensor module (176),
identify the activity state of the user using the sensor module (176) based on detecting the state in which the wearable electronic device (200) is worn on the wrist of the user, and
adjust at least one of the angle between the housing structures (211, 212, 213) and the bending curvature of the display (220) based on the change in the activity state of the user.

**2.** The wearable electronic device (200) of claim 1, wherein:

when the instructions are executed by the at least one processor (320), the wearable electronic device (200) is configured to,
adjust the angle between the first housing structure (211) and the second housing structure (212) by driving the first hinge driving module (231), and
adjust the angle between the first housing structure (211) and the third housing structure (213) by driving the second hinge driving module (232).

**3.** The wearable electronic device (200) of claim 1 or claim 2, wherein:

the display (220) includes a first display portion (221), a second display portion (223) arranged on the first side of the first display portion (221), and a third display portion (223) arranged on the second side of the first display portion (221),
the second housing structure (212) includes a first curvature adjustment module (371) configured to adjust the bending curvature of the second display portion,
the third housing structure (213) includes a second curvature adjustment module (372) configured to adjust the bending curvature of the third display portion, and
when the instructions are executed by the at least one processor (320), the wearable electronic device (200) is configured to adjust the bending curvature of the second display portion (2202) and the third display portion (2203) using the first curvature adjustment module (371) and the second curvature adjustment module (372) based on the change in the activity state of the user.

**4.** The wearable electronic device (200) of claim 3, wherein:

the first display portion (221) is arranged to be supported by the first housing structure (211),
the second display portion (223) is arranged to be supported by the second housing structure (212), and
the third display portion (223) is arranged to be supported by the third housing structure (213).

**5.** The wearable electronic device (200) of claim 1 or claim 2, wherein:
the display (220) includes:

a first display (221), a second display (222) arranged adjacent to the first side of the first display (221), and a third display (223) arranged adjacent to the second side of the first display (221), and
when the instructions are executed by the at least one processor (320), the wearable electronic device (200) is configured to adjust the bending curvature of the second display (222) and the third display (223).

**6.** The wearable electronic device (200) of claim 5, wherein:

the first display (221) is arranged to be supported by the first housing structure (211),
the second display (222) is arranged to be supported by the second housing structure (212), and
the third display (223) is arranged to be supported by the third housing structure (213).

**7.** The wearable electronic device (200) of one of claim 1 to claim 6, wherein:

when the instructions are executed by the at least one processor (320), the wearable electronic device (200) is configured to,
sense movement of the wearable electronic device (200) by operating the sensor module (176),
determine the activity state of the user based on the movement sensing result of the wearable electronic device (200), and
adjust at least one of the angle of the hinge and the bending curvature of the display based on the activity state of the user.

**8.** The wearable electronic device (200) of claim 7, wherein:

when the instructions are executed by the at least one processor (320), the wearable electronic device (200) is configured to,
when the activity state of the user is a first state,
adjust the first housing structure (211) and the second housing structure (212) to form a first angle by driving the first hinge driving module (231), and
adjust the first housing structure (211) and the third housing structure (213) to form a first angle by driving the second hinge driving module (232).

**9.** The wearable electronic device (200) of claim 8, wherein:

when the instructions are executed by the at least one processor (320), the wearable electronic device (200) is configured to,
when the activity state of the user is a first state,
adjust the second display portion (223) and the third display portion (223) to form a first bending curvature.

**10.** The wearable electronic device (200) of claim 8 or claim 9, wherein:

when the instructions are executed by the at least one processor (320), the wearable electronic device (200) is configured to,
when the activity state of the user is a second state with more movement than the first state,
adjust the first housing structure (211) and the second housing structure (212) to form a second angle smaller than the first angle by driving the first hinge driving module (231), and
adjust the first housing structure (211) and the third housing structure (213) to form a second angle smaller than the first angle by driving the second hinge driving module (232).

**11.** The wearable electronic device (200) of claim 10, wherein:

when the instructions are executed by the at least one processor (320), the wearable electronic device (200) is configured to
when the activity state of the user is a second state with more movement than the first state,
adjust the second display portion (223) and the third display portion (223) to form a second bending curvature smaller than the first bending curvature.

**12.** The wearable electronic device (200) of claim 8 or claim 9, wherein:

when the instructions are executed by the at least one processor (320), the wearable electronic device (200) is configured to,
when the activity state of the user is a third state with less movement than the first state,
adjust the first housing structure (211) and the second housing structure (212) to form a third angle greater than the first angle by driving the first hinge driving module (231), and
adjust the first housing structure (211) and the third housing structure (213) to form a third angle greater than the first angle by driving the second hinge driving module (232).

**13.** The wearable electronic device (200) of claim 12, wherein:

when the instructions are executed by the at least one processor (320), the wearable electronic device 200 is configured to,
when the activity state of the user is a third state with less movement than the first state,
adjust the second display portion (223) and the third display portion (223) to form a third bending curvature than the first bending curvature.

**14.** An operating method of a wearable electronic device (200), the method comprising:

detecting a state in which the wearable electronic device (200) is worn on the wrist of a user using a sensor module (176);
identifying an activity state of the user using the sensor module (176) based on detecting the state in which the wearable electronic device (200) is worn on the wrist of the user; and
adjusting at least one of the angle between housing structures (211, 212, 213) and the bending curvature of the display (220) based on the change in the activity state of the user.

**15.** A recording medium storing instructions readable by at least one processor of a wearable electronic device (200), wherein:

when the instructions are executed by the at least one processor, the wearable electronic device (200) is configured to,
detect a state in which the wearable electronic device (200) is worn on the wrist of a user using a sensor module (176),
identify an activity state of the user using the sensor module (176) based on detecting the state in which the wearable electronic device (200) is worn on the wrist of the user, and
adjust at least one of the angle between housing structures (211, 212, 213) and the bending curvature of the display (220) based on the change in the activity state of the user.

FIG. 1
100
ELECTRONIC DEVICE (101)
INPUT MODULE (150)
SOUND OUTPUT MODULE (155)
DISPLAY MODULE (160)
MEMORY (130)
VOLATILE MEMORY (132)
NONVOLATILE MEMORY (134)
INTERNAL MEMORY (136)
EXTERNAL MEMORY (138)
BATTERY (189)
PROCESSOR (120)
MAIN PROCESSOR (121)
AUXILIARY PROCESSOR (123)
COMMUNICATION MODULE (190)
WIRELESS COMMUNICATION MODULE (192)
WIRED COMMUNICATION MODULE (194)
POWER MANAGEMENT MODULE (188)
AUDIO MODULE (170)
SENSOR MODULE (176)
SUBSCRIBER IDENTIFICATION MODULE (196)
ANTENNA MODULE (197)
HAPTIC MODULE (179)
CAMERA MODULE (180)
INTERFACE (177)
CONNECTION TERMINAL (178)
PROGRAM (140)
APPLICATION (146)
MIDDLEWARE (144)
OPERATING SYSTEM (142)
SECOND NETWORK (199)
ELECTRONIC DEVICE (104)
FIRST NETWORK 198
ELECTRONIC DEVICE (102)
SERVER (108)

FIG. 2A

200
241
TIGHTNESS ADJUSTMENT
222
-8℃
212
Outer display (FLEXIBLE)
201
231
12
HINGE (CURVATURE ADJUSTMENT)
221
211
9
3
Main display (flat)
232
6
HINGE (CURVATURE ADJUSTMENT)
202
Inner display (FLEXIBLE)
5,500
213
223
TIGHTNESS ADJUSTMENT
242
211
212
213
210
221
222
223
220
231
232
230
241
242
240

FIG. 2B

212
212a
231
211
211a
232
213
213a
211
212
213
210
231
232
230

FIG. 3A

200
350
BENDING DRIVING UNIT
330
MEMORY
380
DISPLAY MODULE
320
PROCESSOR
340
HINGE DRIVING UNIT
390
COMMUNICATION MODULE
370
FIRST CURVATURE ADJUSTMENT MODULE (371)
FIRST CURVATURE ADJUSTMENT MODULE (372)
ELECTRODE SENSOR
361
IR SENSOR
362
TEMPERATURE SENSOR
363
MOTION SENSOR
364
HUMIDITY SENSOR
365
HINGE SENSOR
366
MAGNETIC FIELD SENSOR
367
WATER DEPTH SENSOR
368
361
362
363
364
365
366
367
368
176

FIG. 3B

211
212
213
210
212
231
365
HUMIDITY SENSOR
210
211
ELECTRODE SENSOR1
361a
PD
362a
360
363
362
361b
362b
ELECTRODE SENSOR2
MOTION SENSOR
364
232
213

FIG. 4

DISPLAY MODULE (380)
DIGITIZER DRIVING UNIT (470)
DISPLAY (220)
DIGITIZER (460)
DISPLAY DRIVER IC (430)
INTERFACE MODULE (431)
MEMORY (433)
IMAGE PROCESSING MODU (435)
MAPPING MODULE (437)
TOUCH CIRCUIT (450)
TOUCH SENSOR (431)
TOUCH SENSOR IC (433)

FIG. 5

ELEMENT THAT ADJUSTS WATCH WEARING FIT
200
510
ANGLE BETWEEN MAIN/AUXILIARY DISPLAYS
520
AUXILIARY DISPLAY CURVATURE
530
BAND TIGHTNESS DEGREE

FIG. 6

AUTOMATIC FIT ADJUSTMENT AND VISUAL FEEDBACK FOR EACH SITUATION
610
620
611
621
10
08
10
08
LOOSE
TIGHT

FIG. 7

USER MANUALLY PERFORMS FINE-ADJUSTMENT
710
1008
LOOSE
TIGHT
720
AUTOMATICALLY APPLIED TO SUBSEQUENT
SAME WEARING SITUATION WITHOUT
MANUAL ADJUSTMENT

HINGE ANGLE DECREASES
TIGHTEN BAND
200
211
212
213
240
HINGE ANGLE INCREASES
LOOSEN BAND
200
211
212
213
240

FIG. 8

LOOSE
TIGHT
200
223
222
LOOSEN BAND
TIGHTEN BAND

FIG. 9

# FIG. 10

1110
HINGE ANGLE : 120 °
240
LONG BAND LENGTH
HINGE ANGLE : 90 °
1120
240
SHORT BAND LENGTH
1130
CURVATURE = 170 °
211
213
212
240
CURVATURE = 100 °
211
213
1140
212
240
CHANGE IN ANGLE BETWEEN MAIN/AUXILIARY DISPLAYS
→ CHANGE BAND LENGTH THROUGH ADJUSTMENT OF HINGE ANGLE
CHANGE IN CURVATURE OF AUXILIARY DISPLAY (HEREINAFTER: CURVATURE)
→ AUXILIARY DISPLAY MAY BE VIEWED FROM INNER WRIST THROUGH CURVATURE ADJUSTMENT

FIG. 11

1110
START
WATCH IS NOT WORN
1105
HINGE ANGLE = 180 °
CURVATURE = 180 °
1110
WATCH IS WORN
1115
DEFAULT VALUE FOR EACH INDIVIDUAL
1120
SITUATION THAT REQUIRES AUTOMATIC FIT ADJUSTMENT (SEE FIG. 12 AND FIG. 13)
1125
EXERCISE DETECTION
1130
1135
SMALL CURVATURE
SMALL HINGE ANGLE
SHORT BAND LENGTH
MOISTURE (SWEAT) DETECTION
1140
1145
LARGE CURVATURE
MAINTAIN HINGE ANGLE
LONG BAND LENGTH
EXERCISE TERMINATION
1150
1155
LARGE CURVATURE
LARGE HINGE ANGLE
LONG BAND LENGTH
END

FIG. 12

1210
1220
220
Sat, Dec 28
10:08
Turn off
Loosening your
watch...
Tap knot icon to stop
SLEEP MODE
LOOSE

FIG. 13

1310
1320
220
Sat, Dec 28
10:08
5,500
Tightening your watch...
Tap knot icon to stop
5,500
DETECT EXERCISE
TIGHT

FIG. 14
START: WATCH IS WORN
BASIC WEARING FIT
1405
1410
WATER LOCK RELEASE
1435
SLEEP MODE
1440
EXERCISE DETECTION
1455
BIOMETRIC DATA MEASUREMENT
NOT DETECTED
1415
MOISTURE DETECTION
1445
ANY EXERCISE TYPE, SUCH AS WALKING, RUNNING, CYCLING
1460
STORE ANY TYPE OF BIOMETRIC DATA
DETECTED
1420
PRESENCE OR ABSENCE OF PREVIOUS MANUAL ADJUSTMENT VALUE
1450
PRESENCE OR ABSENCE OF PREVIOUS MANUAL ADJUSTMENT VALUE
No
No
Yes
Yes
1425
APPLY FIT DEFINED IN SYSTEM
APPLY FIT USING DEFAULT SETTING
1430
END

FIG. 15
1510
LOOSE MODE
220
1. VISUALIZE LOOSENING CONCEPT USING ARROW LINE GRADATION THAT RELEASES FROM CENTER FROM OUTSIDE
2. INTUITIVELY DISPLAY LOOSE FEELING THROUGH GREEN COLOR
1520
TIGHT MODE
220
1. VISUALIZE TIGHTENING CONCEPT USING ARROW LINE GRADATION THAT TIGHTENS FROM OUTSIDE FROM CENTER
2. INTUITIVELY DISPLAY TIGHT FEELING THROUGH RED COLOR

FIG. 16

1610
MANUAL ADJUSTMENT
A METHOD OF ADJUSTING FIT USING ADJUSTMENT BAR
1650
1620
220
FABRIC MATERIAL STRIP PART (TOP)
*DISPLAY FIRST AREA
WATCH MAIN SCREEN PORTION
*DISPLAY SECOND AREA
DIGITAL BUCKLE UI AREA
SHOWING BAND ADJUSTMENT
1615
FABRIC MATERIAL STRIP PART (BOTTOM)
YOU CAN CONTROL IN DISPLAY
SECOND AREA BY TURNING YOUR WRIST.
TAP
1630
IF ADJUSTMENT BAR IS CALLED,
IT IS ADJUSTED TO THE MOST RECENTLY ADJUSTED ITEM.
LONG TAP
1640
Adjust
Hinge
Curve
SELECT ITEM TO BE CHANGED THROUGH ADJUSTMENT OF
BAND LENGTH (HINGE ADJUSTMENT? CURVATURE ADJUSTMENT?)
220
WHEN SELECTING UPPERMOST PORTION OF ADJUSTMENT BAR,
BAND IS ADJUSTED TO BE TIGHT.
1660
220
WHEN SELECTING LOWERMOST PORTION OF ADJUSTMENT BAR,
BAND IS ADJUSTED TO BE LOOSE

FIG. 17

1710
SLEEP MODE
1730
AUTOMATICALLY APPLY CORRESPONDING FIT VALUE TO SLEEP MODE
1740
1720
10
08
OR
1750
AUTOMATICALLY LOOSENED
MANUAL RE-ADJUSTMENT → TIGHT
HINGE ANGLE OR AUXILIARY DISPLAY CURVATURE DECREASES WHILE TIGHTENING BAND
TIGHTENED

FIG. 18

1810
1820
< SLEEP MODE >
220
Sat, Dec 28
10:08
Turn off
Loosening your
watch...
Tap knot icon to stop

FIG. 19

1910
< EXERCISE DETECTION >
1920
220
Sat, Dec 28
10:08
5,500
Tightening your
watch...
Tap knot icon to stop
5,500

FIG. 20

2010
< WATER LOCK RELEASE/MOISTURE DETECTION >
2020
220
Sat, Dec 28
10:08
Loosening your
watch and
ejecting water...

FIG. 21

2110
< BIOMETRIC DATA MEASUREMENT >
2120
220
Move you watch higher on your wrist.
Loosening your watch...
Tap knot icon to stop

FIG. 22

START
START SWIMMING
2210
Very tight
2220
2230
SET COMPLETED
(REST DETECTION)
2250
SET COMPLETED
(WATER LOCK
RELEASE)
2240
Tight
2260
Very loose
END

FIG. 23

START
START SWIMMING
2210
Very tight
2220
2230
SET COMPLETED (REST DETECTION)
2250
SET COMPLETED (WATER LOCK RELEASE)
2240
2260
Tight
Very loose
2330
(MANUALLY) ADJUST HINGE ANGLE TO INCREASE
2335
Medium
2340
COLLECT CORRESPONDING FIT VALUE AND SERVICE DATA IN EXTERNAL ELECTRONIC DEVICE
2345
ADJUST FIT DEFAULT VALUE THROUGH DATA ANALYSIS → APPLY TO ANOTHER USER
2350
REFLECT CORRESPONDING VALUE WHEN AUTOMATICALLY ADJUSTING FIT OF USER LATER

FIG. 24

START
DETECT RUNNING
2405
Very tight
2410
REST
2415
①
YES
NO
② SKIN HUMIDITY DETECTION
2420
NO
YES
Very tight
2425
(MANUALLY) ADJUST AUXILIARY DISPLAY CURVATURE TO INCREASE
2430
Medium
2435
Medium
2440
(MANUALLY) ADJUST AUXILIARY DISPLAY CURVATURE TO INCREASE
2445
Loose
2450
COLLECT CORRESPONDING FIT VALUE AND SERVICE DATA IN EXTERNAL ELECTRONIC DEVICE
2455
CAUSE ANALYSIS
1. AMOUNT OF SWEAT
2. BODY TEMPERATURE
3. RUN DISTANCE
2460
③ COLLECT CORRESPONDING FIT VALUE AND SERVICE DATA IN SERVER
2465
RUNNING COMPLETED
2470
Loose
2475

FIG. 25

START
START SLEEP
2505
Very tight
2510
DEEP SLEEP STAGE RECOGNITION
1
2515
YES
NO
Loose
2
2520
LIGHT SLEEP STAGE (+REM)
2525
DEEP SLEEP STAGE
2530
INCREASE IN SWEAT/BODY TEMPERATURE WHILE SLEEPING
2535
Very loose
2540
WAKE-UP TIME IMMINENT
3
2545
LIGHT SLEEP STAGE (+REM)
4
2550
Tight
2555
DEEP SLEEP STAGE
4
2560
Loose
2565

## INTERNATIONAL SEARCH REPORT

International application No.
**PCT/KR2024/020891**

**A. CLASSIFICATION OF SUBJECT MATTER**

**G04B 37/14**(2006.01)i; **G04G 21/02**(2010.01)i; **G04G 9/00**(2006.01)i; **G04G 99/00**(2010.01)i; **A44C 5/14**(2006.01)i; **G06F 1/16**(2006.01)i; **G04G 17/04**(2006.01)i; **G04G 21/00**(2010.01)i

According to International Patent Classification (IPC) or to both national classification and IPC

**B. FIELDS SEARCHED**

Minimum documentation searched (classification system followed by classification symbols)

G04B 37/14(2006.01); A44C 5/00(2006.01); A44C 5/18(2006.01); A61B 5/021(2006.01); A63B 102/32(2015.01); A63B 57/00(2006.01); G04G 17/00(2006.01); G04G 21/04(2010.01); G04G 21/06(2010.01); G06F 1/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 힌지(hinge), 벤딩(bending), 웨어러블(wearable), 스트랩(strap), 구동(drive), 디스플레이(display)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2018-0006721 A (MYONG, Jun Hee) 19 January 2018 (2018-01-19) See paragraphs [0015]-[0025] and figure 1. | 14-15 |
| A | | 1-13 |
| Y | CN 114190663 A (NOOER SCIENCE AND TECHNOLOGY CO., LTD.) 18 March 2022 (2022-03-18) See paragraphs [0114]-[0116] and figure 2. | 14-15 |
| A | KR 10-2017-0057043 A (KYUNGPOOK NATIONAL UNIVERSITY INDUSTRY-ACADEMIC COOPERATION FOUNDATION) 24 May 2017 (2017-05-24) See paragraphs [0073]-[0078] and figure 3a. | 1-15 |
| A | KR 10-2504023 B1 (KIM, Gi Ja et al.) 24 February 2023 (2023-02-24) See paragraphs [0027]-[0033] and figure 3. | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 March 2025** | **25 March 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2024/020891**

**C. DOCUMENTS CONSIDERED TO BE RELEVANT**

| Category* | Citation of document, with indication, where appropriate, of the relevant passages | Relevant to claim No. |
|---|---|---|
| A | KR 10-2011-0047163 A (THE SWATCH GROUP RESEARCH AND DEVELOPMENT LTD.) 06 May 2011 (2011-05-06)<br>See paragraphs [0020]-[0038]. | 1-15 |

Form PCT/ISA/210 (second sheet) (July 2022)

**INTERNATIONAL SEARCH REPORT**
**Information on patent family members**

International application No.
**PCT/KR2024/020891**

| Patent document cited in search report | Publication date (day/month/year) | Patent family member(s) | Publication date (day/month/year) |
|---|---|---|---|
| KR 10-2018-0006721 A | 19 January 2018 | None | |
| CN 114190663 A | 18 March 2022 | None | |
| KR 10-2017-0057043 A | 24 May 2017 | KR 10-1826000 B1 | 06 February 2018 |
| KR 10-2504023 B1 | 24 February 2023 | None | |
| KR 10-2011-0047163 A | 06 May 2011 | CN 102106632 A | 29 June 2011 |
| | | CN 102106632 B | 03 August 2016 |
| | | EP 2316298 A1 | 04 May 2011 |
| | | EP 2316298 B1 | 30 May 2012 |
| | | JP 2011-092714 A | 12 May 2011 |
| | | JP 5312428 B2 | 09 October 2013 |
| | | US 2011-0099771 A1 | 05 May 2011 |
| | | US 8893938 B2 | 25 November 2014 |

Form PCT/ISA/210 (patent family annex) (July 2022)